(19) Europäisches Patentamt
European Patent Office
Office européen des brevets

(11) **EP 4 518 121 A1**

(12) **EUROPEAN PATENT APPLICATION**

(43) Date of publication:
**05.03.2025 Bulletin 2025/10**

(21) Application number: **24198048.1**

(22) Date of filing: **03.09.2024**

(51) International Patent Classification (IPC):
**H02M 1/00** (2006.01)　　**H02M 3/335** (2006.01)

(52) Cooperative Patent Classification (CPC):
**H02M 1/0074; H02M 3/33569; H02M 1/0058**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023 CN 202311134898**

(71) Applicant: **Delta Electronics (Shanghai) Co., Ltd.**
**Shanghai 201209 (CN)**

(72) Inventors:
• **LIU, Hong**
**Shanghai, 201209 (CN)**
• **HAN, Yuxin**
**Shanghai, 201209 (CN)**
• **OUYANG, Sanyuan**
**Shanghai, 201209 (CN)**
• **ZHANG, Wen**
**Shanghai, 201209 (CN)**

(74) Representative: **Balder IP Law, S.L.**
**Paseo de la Castellana 93**
**5ª planta**
**28046 Madrid (ES)**

(54) **POWER CONVERSION MODULE AND CONTROL METHOD THEREFOR, AND POWER CONVERSION SYSTEM**

(57)　The present disclosure relates to a power conversion module, a control method, and a power conversion system. An interconnecting branch is connected between a first power unit and a second power unit. The interconnecting branch includes a resonant capacitor and a switching unit that are electrically connected. The resonant inductor is connected between the midpoint of a first bridge arm and the midpoint of a second bridge arm, or in series with the resonant capacitor. In the present disclosure, by controlling the on and off of the interconnecting branch, a current opposite to the power grid current is generated on the branch connecting the first bridge arm and the second bridge arm, thereby realizing the soft switching of the switching transistors of the power conversion module.

## Description

### TECHNICAL FIELD

The present disclosure relates to the technical field of electronic circuit, and particularly to a power conversion module and control method therefor, and a power conversion system.

### BACKGROUND

Solid-state-transformer (SST), also known as power electronic transformer, generally refers to a device that directly converts the voltage of medium-voltage power grip or high-voltage power grid into low voltage for output through power electronic circuits and high-frequency isolation transformers, which has significant advantages of small size and light weight, and has broad application prospects in power consumption fields such as energy storage, electric vehicles, data centers, etc.

### SUMMARY

In a first aspect, the present disclosure provides a power conversion module, including a first power unit, a second power unit, an interconnecting branch, and a resonant inductor. The first power unit includes a first bridge arm, a first capacitor unit, a first side, and a second side. The second side of the first power unit is connected to both ends of the first bridge arm. The first capacitor unit is connected in parallel with the first bridge arm, and the first capacitor unit includes a positive terminal and a negative terminal. The second power unit includes a second bridge arm, a second capacitor unit, a first side, and a second side. The second side of the second power unit is connected to both ends of the second bridge arm. The second capacitor unit is connected in parallel with the second bridge arm. The second capacitor unit includes a positive terminal and a negative terminal. A midpoint of the second bridge arm and a midpoint of the first bridge arm are interconnected to realize a series connection of the first sides of the first power unit and the second unit. The interconnecting branch is connected between the second side of the first power unit and the second side of the second power unit. The interconnecting branch includes a resonant capacitor and a switching unit that are electrically connected to each other. The resonant inductor is connected between the midpoint of the first bridge arm and the midpoint of the second bridge arm, or in series with the resonant capacitor.

In a second aspect, the present disclosure also provides a control method for the power conversion module described in the first aspect. The control methods include the following steps.

In step S1, the switching unit is controlled to cause the current flowing through the branch connecting the midpoint of the first bridge arm and the midpoint of the second bridge arm to be in the opposite direction of the current flowing through the first side of the first power unit before one of the switches in the first bridge arm and the second bridge arm is turned on, so as to realize a soft turn-on of the switch.

In a third aspect, the present disclosure also provides a power conversion system, which includes N power conversion modules as described in any one of the first aspects, where N is an integer greater than or equal to 1.

### BRIEF DESCRIPTION OF THE DRAWINGS

The accompanying drawings, which form part of the present disclosure, are provided to facilitate understanding of the present disclsoure. The illustrative embodiments of the present disclosure and the descriptions thereof serve to explain the present disclosure and do not constitute improper limitations of the present disclosure.

In order to illustrate the technical solutions in the embodiments of the present disclosure more clear, the accompanying drawings that will be used in the description of the embodiments will be briefly introduced below. It is apparent that the drawings described below represent only some embodiments of the present disclosure. For those of ordinary skill in the art, other drawings can also be derived based on these drawings without creative efforts.

FIG. 1 is a structural block diagram of a power conversion module according to an embodiment.

FIG. 2 is another structural block diagram of a power conversion module according to an embodiment.

FIG. 3 is a structural block diagram of a switching unit according to an embodiment.

FIG. 4 is another structural block diagram of a switching unit according to an embodiment.

FIG. 5 is a structural block diagram of a switching unit according to another embodiment.

FIG. 6 is another structural block diagram of a switching unit according to another embodiment.

FIG. 7 is a schematic structural diagram of a power conversion module according to an embodiment.

FIG. 8 is a schematic structural diagram of a power conversion module according to another embodiment.

FIG. 9 is a schematic structural diagram of a power conversion module according to another embodiment.

FIG. 10 is a schematic structural diagram of a first power unit and a second power unit according to an embodiment.

FIG. 11 is a schematic structural diagram of a first power unit and a second power unit according to another embodiment.

FIG. 12 is a schematic structural diagram of a power conversion module according to another embodiment.

FIGS. 13(a)-(d) are schematic diagrams of pre-stage working circuits during a steady-state process according to an embodiment.

FIG. 14 is a comparison diagram of modes of a pre-stage and a post-stage according to an embodiment.

FIG. 15 is a schematic diagram of a current loop during a switch turn-on process according to an embodiment.

FIG. 16 is a simulation diagram of a turn-on process of a switch S11 according to an embodiment.

FIGs. 17(a)-(c) are simulation diagrams of a turn-off process of a switch S11 under different switching sequences according to another embodiment.

FIG. 18 is a schematic diagram of a state trajectory of a resonant circuit during a turn-on process of a switch S11 according to an embodiment.

FIG. 19 is a simulation diagram of a turn-off process of a switch S11 according to an embodiment.

FIG. 20 is a schematic diagram of a state trajectory of a resonant circuit during a turn-off process of a switch S11 according to an embodiment.

FIG. 21 is an example showing switching sequences and time intervals of a post-stage according to another embodiment.

FIG. 22 is a schematic structural diagram of a power conversion module according to another embodiment.

FIG. 23(a) is a simulation diagram of the power conversion module shown in FIG. 22.

FIG. 23(b) is a partial enlarged view of a steady-state process in FIG. 23(a).

FIG. 23(c) is a partial enlarged view of a turn-on process in FIG. 23(a).

FIG. 23(d) is a partial enlarged view of a turn-off process in FIG. 23(a).

FIG. 24 is a structural block diagram of a power conversion system according to an embodiment.

FIG. 25 is a structural block diagram of a power conversion system according to another embodiment.

FIG. 26 is a schematic structural diagram of a power conversion system according to an embodiment.

FIG. 27 is a schematic structural diagram of a power conversion system according to another embodiment.

DETAILED DESCRIPTION OF THE EMBODIMENTS

To facilitate a better understanding of the present disclosure, a more comprehensive description of the application will be provided with reference to the relevant accompanying drawings. The accompanying drawings illustrate a preferred embodiment of the present disclosure. However, it should be noted that the present disclosure can be implemented in various forms and is not limited to the embodiments described herein. Instead, these embodiments are intended to provide a thorough and comprehensive understanding of the content of the present disclosure.

Unless otherwise defined, all technical and scientific terms used herein have the same meaning as commonly understood by one of ordinary skill in the art to which the present disclosure belongs. The terms used in the description of the disclosure are solely for the purpose of describing specific embodiments and are not intended to limit the scope of the present disclosure. The term "and/or" used in the present disclosure includes any and all combinations of one or more of the related listed items.

When the terms "including," "having," and "comprising" are used herein, unless specifically limited by terms such as "only", "consisting of" etc., another component can also be added. Unless indicated otherwise, singular terms should be interpreted as including the plural form and should not be understood as limited to a quantity of one.

It should be understood that, although the terms "first", "second," etc. may be used herein to describe various components, these terms should not be limiting. These terms are used solely to distinguish one component from another. For example, without departing from the scope of the present disclosure, the first component may be referred to as the second component, and similarly, the second component may be referred to as the first component.

In the present disclosure, unless otherwise expressly specified and limited, the terms such as "connect" and "couple" should be interpreted broadly. For example, it may refer to direct connection as well as indirect connection through an intermediate medium. It may also indicate an internal connection or interaction between two components. Those of ordinary skill in the art can understand the specific meanings of these terms in the context of the present disclosure based on the specific situations.

As known to the inventors, using SST for power supply can improve system efficiency and power density. In traditional technology, the SST structure typically includes an AC-DC stage and a DC-DC stage, where the pre-stage (i.e., the AC-DC stage) has a power factor regulation function and adopts a continuous current control mode. In this mode, the switches are subjected to hard switching, resulting in large switching losses and low system operating frequency.

How to reduce switching losses and increase system operating frequency has become an urgent problem to be solved.

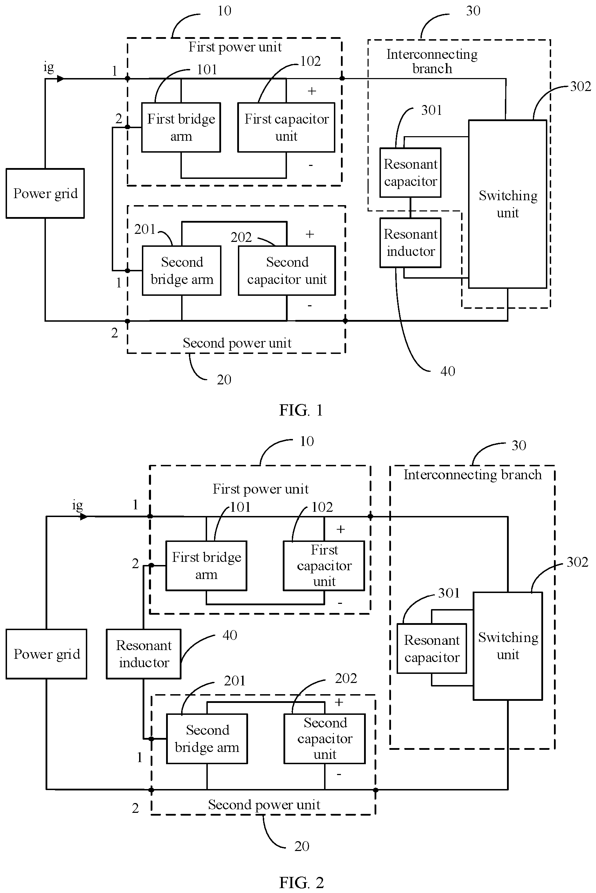

Referring to FIG. 1 and FIG. 2, in some embodiments, the present disclosure provides a power conversion module, which includes a first power unit 10, a second power unit 20, an interconnecting branch 30, and a resonant inductor 40.

The first power unit 10 includes a first bridge arm 101, a first capacitor unit 102, a first side, and a second side. The first bridge arm 101 and the first capacitor unit 102 are connected in parallel, and the first capacitor unit 102 includes a positive terminal and a negative terminal. The first side of the first power unit 10 is one of the input side and the output side of the first power unit 10, and the second side of the first power unit 10 is the other one of the input side and the output side of the first power unit 10. For example, in FIG. 1 and FIG.2, the input side of the first power unit 10 is taken as the first side of the first power unit 10, and the output side of the first power unit 10 is taken as the second side of the first power unit 10. In this case, the first side of the first power unit 10 includes a first terminal 1 and a second terminal 2. The first terminal 1 is connected to a terminal where the first bridge arm 101 is connected to the power grid, and the second terminal 2 is connected to the midpoint of the first bridge arm 101. The second side of the first power unit 10 is connected to both ends of the first bridge arm 101. In some other embodiments, other input sources may be used to supply power to the power conversion module instead of the power grid.

The second power unit 20 includes a second bridge arm 201, a second capacitor unit 202, a first side, and a second side. The second bridge arm 201 and the second capacitor unit 202 are connected in parallel, and the second capacitor unit 202 includes a positive terminal and a negative terminal. The first side of the second power unit 20 is one of the input side and the output side of the second power unit 20, and the second side of the second power unit 20 is the other one of the input side and the output side of the second power unit 20. For example, in FIG. 1 and FIG. 2, the input side of the second power unit 20 is taken as the first side of the second power unit 20, and the output side of the second power unit 20 is taken as the second side of the second power unit 20. In this case, the first side of the second power unit 20 also includes a first terminal and a second terminal. The first terminal is connected to the midpoint of the second bridge arm 201, and the second terminal is connected to the endpoint where the second bridge arm 201 is connected to the power grid. The second side of the second power unit 20 is connected to both ends of the second bridge arm 201.

The midpoint of the first bridge arm 101 and the midpoint of the second bridge arm 201 are interconnected to achieve a series connection of the first sides of the first power unit 10 and the second power unit 20.

The interconnecting branch 30 is connected between the second side of the first power unit 10 and the second side of the second power unit 20. The interconnecting branch 30 includes a resonant capacitor 301 and a switching unit 302

that are electrically connected to each other.

There are two connection methods for the resonant inductor 40 in the embodiments. As shown in FIG. 1, the resonant inductor 40 is connected to the resonant capacitor 301 in series. Alternatively, as shown in FIG. 2, the resonant inductor 40 is connected between the midpoint of the first bridge arm 101 and the midpoint of the second bridge arm 201.

In the above embodiments, a resonant circuit is formed by the first power unit 10, the second power unit 20, the resonant inductor 40, and the interconnecting branch 30 connected between the first power unit 10 and the second power unit 20. By controlling the switching unit 302 to be on and off, the resonant current can flow into the interconnecting branch 30 to generate a current in an opposite direction to the input current ig. At this time, the first bridge arm 101 and the second bridge arm 201 can be turned on or off to achieve soft switching. In addition, the switching unit 302 in the interconnecting branch 30 can also be used as a post-stage circuit to output power to the load, realizing the reuse of the switch element, further reducing the switch devices and drive circuits required to achieve the soft switching in the pre-stage circuit, and saving costs. In addition, the design in which the resonant capacitor is connected between the two power units allows the use of a small-capacity resonant capacitor, which improves the power density.

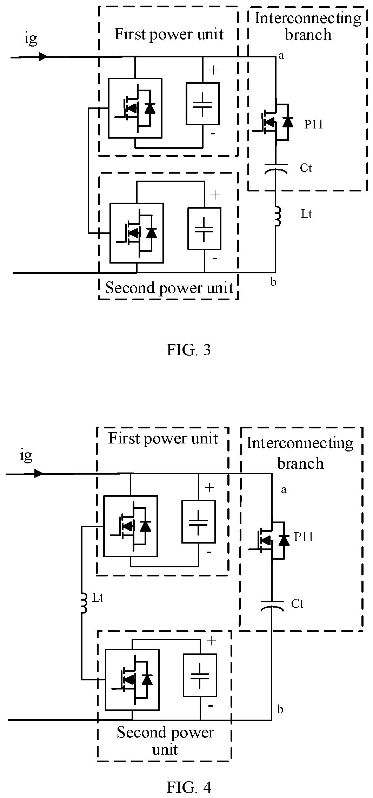

Referring to FIG. 3 and FIG. 4, in a possible embodiment, the switching unit includes a first switch P11. In this case, the interconnecting branch 30 includes the first switch P11 and a resonant capacitor Ct, and the interconnecting branch 30 is connected between the positive terminal of the first capacitor unit 102 and the negative terminal of the second capacitor unit 202. There are two different positions for the resonant inductor. As shown in FIG 3, the first switch P11, the resonant capacitor Ct and the resonant inductor Lt are connected in series. Alternatively, as shown in FIG. 4, the resonant inductor Lt is connected between the midpoint of the first bridge arm 101 and the midpoint of the second bridge arm 201. It should be noted that the first switch P11 in this embodiment is a transistor, and the transistor includes a reverse-biased diode.

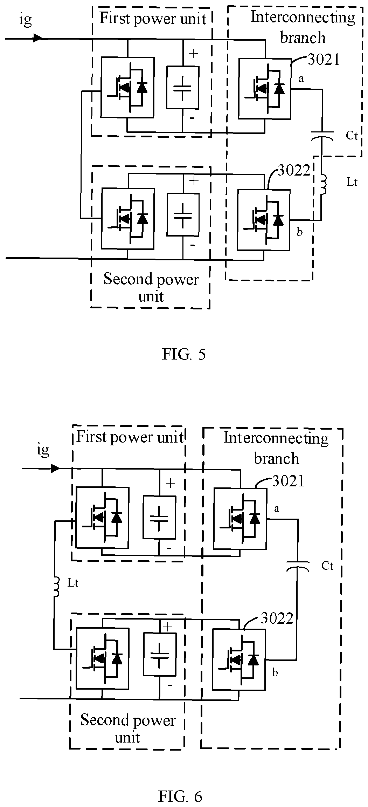

Referring to FIG. 5 and FIG. 6, in another possible embodiment, the switching unit includes a third bridge arm 3021 and a fourth bridge arm 3022.

The third bridge arm 3021 is connected in parallel with the first capacitor unit 102.

The fourth bridge arm 3022 is connected in parallel with the second capacitor unit 202.

In this case, the interconnecting branch 30 includes the third bridge arm 3021, the fourth bridge arm 3022, and the resonant capacitor Ct. As shown in FIG. 5, the resonant capacitor Ct and the resonant inductor Lt are connected in series between the midpoint a of the third bridge arm 3021 and the midpoint b of the fourth bridge arm 3022. As shown in FIG. 6, the resonant capacitor Ct is connected between the midpoint a of the third bridge arm 3021 and the midpoint b of the fourth bridge arm 3022, and the resonant inductor Lt is connected between the midpoint of the first bridge arm 101 and the second bridge arm 201.

In the above embodiments, the first power unit and the second power unit form a pre-stage AC-DC circuit of the power conversion module, and the switching unit forms a post-stage DC-DC circuit. The high-frequency bridge arms in the pre-stage, the switching unit in the post-stage, the resonant inductor and the resonant capacitor form a resonant circuit. By controlling the switching unit to be on and off, the resonant current can flow into the interconnecting branch after the power conversion module is connected to the power grid, so that a current opposite to the input current ig can be generated in the branch connecting the midpoint of the first bridge arm and the midpoint of the second bridge arm, realizing the soft switching of the pre-stage. In addition, the switching unit in the post-stage can be reused by the switching unit in the interconnecting branch, which further reduces the switching devices and drive circuits required to achieve the soft switching in the pre-stage, saves costs, and improves the system power density.

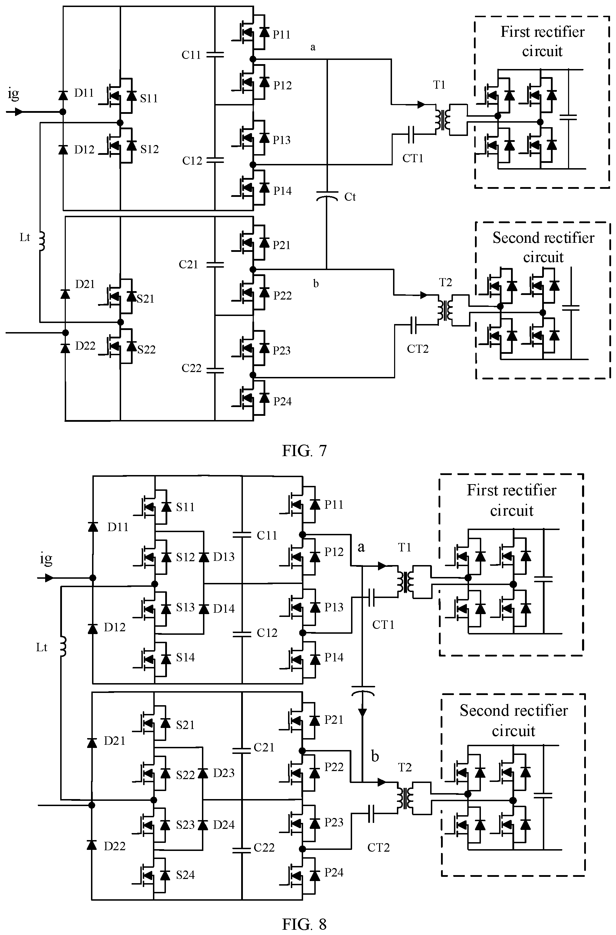

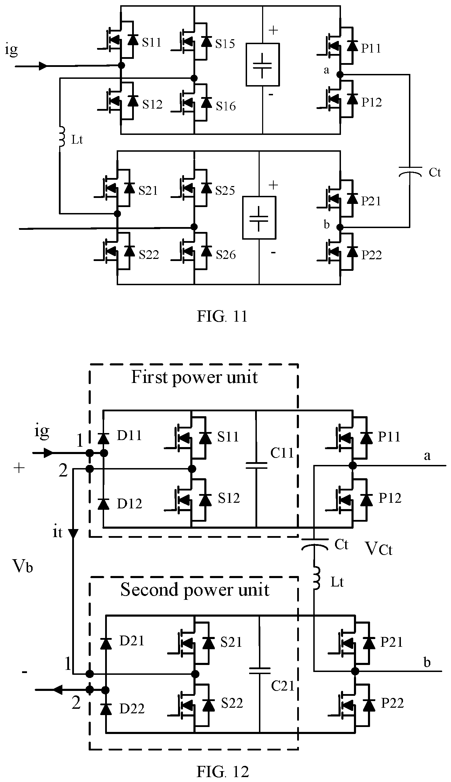

Referring to FIG. 7 and FIG. 11, in order to adapt to different types of converters, the switching unit of the present disclosure may have different topologies as needed. In the interconnecting branches formed by the switching units with different topologies and the resonant capacitor Ct, by controlling the switching unit to be on and off, the soft switching function in the above embodiments can also be realized. Furthermore, the topology of the first power unit and the second power unit can also be adjusted, and based on the same principle, the soft switching can also be achieved. The following will be illustrated by taking the resonant inductor Lt connected between the midpoint of the first bridge arm and the midpoint of the second bridge arm as an example.

Referring to FIG. 7, for example, for a series half bridge (SHB) converter, the first capacitor unit includes a first capacitor C11 and a second capacitor C12 connected in series, and the second capacitor unit includes a third capacitor C21 and a fourth capacitor C22 connected in series.

The switching unit includes a third bridge arm, a fourth bridge arm, a fifth bridge arm, and a sixth bridge arm.

The third bridge arm is connected in parallel with the first capacitor C11. The third bridge arm includes a switch P11 and a switch P12 connected in series.

The fourth bridge arm is connected in parallel with the third capacitor C21. The fourth bridge includes a switch P21 and a switch P22 connected in series.

The fifth bridge arm is connected in parallel with the second capacitor C12. The fifth bridge arm includes a switch P13 and a switch P14 connected in series.

The sixth bridge arm is connected in parallel with the fourth capacitor C22. The sixth bridge arm includes a switch P23 and a switch P24 connected in series.

The resonant capacitor Ct is connected between the midpoint a of the third bridge arm and the midpoint b of the fourth bridge arm.

Referring to FIG. 8, further, the first bridge arm includes a second switch S11, a third switch S12, a fourth switch S13, and a fifth switch S14 that are connected in sequence. The second bridge arm includes a sixth switch S21, a seventh switch S22, an eighth switch S23, and a ninth switch S24 that are connected in sequence.

The power conversion module further includes a first diode D11, a second diode D12, a third diode D21, a fourth diode D22, a fifth diode D13, a sixth diode D14, a seventh diode D23, an eighth diode D24, a first main power capacitor CT1, a second main power capacitor CT2, a first transformer T1, a second transformer T2, a first rectifier circuit, and a second rectifier circuit.

The first diode D11 and the second diode D12 are connected in series and then connected in parallel with the first bridge arm. The common connection point of the first diode D11 and the second diode D12 and the midpoint of the first bridge arm are respectively connected to the first side of the first power unit. The cathode of the fifth diode D13 is connected to the common connection point of the second switch S11 and the third switch S12, and the anode of the fifth diode D13 is connected to the common connection point of the first capacitor C11 and the second capacitor C12. The anode of the sixth diode D14 is connected to the common connection point of the fourth switch S13 and the fifth switch S14, and the cathode of the sixth diode D14 is connected to the common connection point of the first capacitor C11 and the second capacitor C12. The first main power capacitor CT1 and the primary winding of the first transformer T1 are connected in series, and connected between the midpoint of the third bridge arm and the midpoint of the fifth bridge arm. The first rectifier circuit is connected to the secondary winding of the first transformer.

The third diode D21 and the fourth diode D22 are connected in series and then connected in parallel with the second bridge arm. The common connection point of the third diode D21 and the fourth diode D22 and the midpoint of the second bridge arm are respectively connected to the first side of the second power unit. The cathode of the seventh diode D23 is connected to the common connection point of the sixth switch S21 and the seventh switch S22, and the anode of the seventh diode D23 is connected to the common connection point of the third capacitor C21 and the fourth capacitor C22. The anode of the eighth diode D24 is connected to the common connection point of the eighth switch S23 and the ninth switch S24, and the cathode of the eighth diode D24 is connected to the common connection point of the third capacitor C21 and the fourth capacitor C22. The second main power capacitor CT2 and the primary winding of the second transformer T2 are connected in series, and connected between the midpoint of the fourth bridge arm and the midpoint of the sixth bridge arm. The second rectifier circuit is connected to the secondary winding of the second transformer.

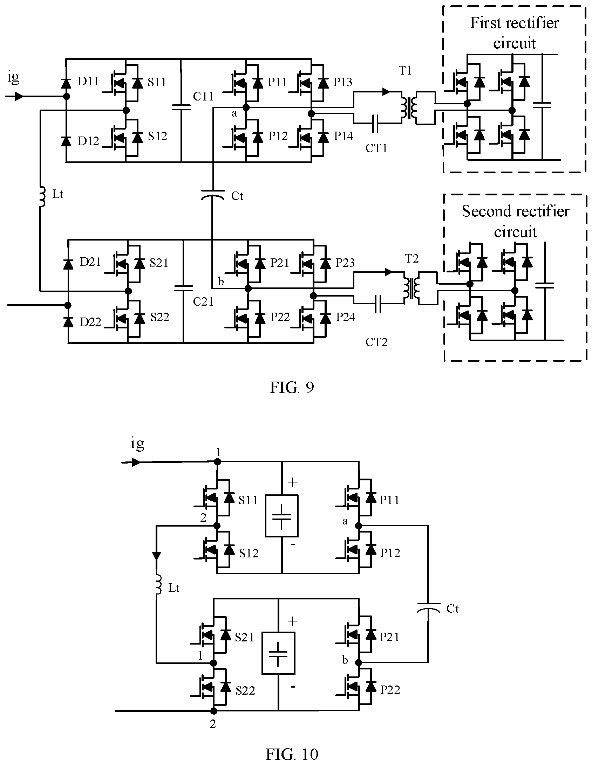

Referring to FIG. 9, for example, for the resonant converter, the first capacitor unit includes a first capacitor C11, and the second capacitor unit includes a third capacitor C21.

The switching unit includes a third bridge arm, a fourth bridge arm, a fifth bridge arm, and a sixth bridge arm.

The third bridge arm, the fifth bridge arm, and the first capacitor C11 are connected in parallel. The third bridge arm includes a switch P11 and a switch P12 connected in series. The fifth bridge arm includes a switch P13 and a switch P14 connected in series.

The fourth bridge arm, the sixth bridge arm, and the third capacitor C21 are connected in parallel. The fourth bridge arm includes a switch P21 and a switch P22 connected in series. The sixth bridge arm includes a switch P23 and a switch P24 connected in series.

The resonant capacitor Ct is connected between the midpoint of the third bridge arm and the midpoint of the fourth bridge arm. The first main power capacitor CT1 and the primary winding of the first transformer T1 are connected in series, and connected between the midpoint of the third bridge arm and the midpoint of the fifth bridge arm. The first rectifier circuit is connected to the secondary winding of the first transformer T1. The second main power capacitor CT2 and the primary winding of the second transformer T2 are connected in series, and connected between the midpoint of the fourth bridge arm and the midpoint of the sixth bridge arm. The second rectifier circuit is connected to the secondary winding of the second transformer T2.

Referring to FIG. 10, in some embodiments, the first power unit and the second power unit are half-bridge structures. In this case, the positive terminal of the first capacitor unit and the midpoint of the first bridge arm are connected to the first side of the first power unit, and the negative terminal of the second capacitor unit and the midpoint of the second bridge arm are connected to the first side of the second power unit.

Referring to FIG. 11, in some embodiments, the first power unit and the second power unit are full-bridge structures. In this case, the first power unit further includes a seventh bridge arm. The seventh bridge arm and the first bridge arm are connected in parallel. The midpoint of the first bridge arm and the midpoint of the seventh bridge arm are connected to the first side of the first power unit. As shown in FIG. 11, a switch S15 and a switch S 16 are connected in series to form the seventh bridge arm.

The second power unit further includes an eighth bridge arm. The eighth bridge arm and the second bridge arm are connected in parallel. The midpoint of the second bridge arm and the midpoint of the eighth bridge arm are connected to the first side of the second power unit. As shown in FIG. 11, a switch S25 and a switch S26 are connected in series to form the eighth bridge arm.

It should be understood that the power conversion module in the embodiments further includes a control unit. The control unit is configured to control the switching unit to cause, before one of the switches in the first bridge arm and the second bridge arm is turned on, the current flowing through the branch connecting the midpoint of the first bridge arm and the midpoint of the second bridge arm to be in the opposite direction of the current flowing through the first side of the first power unit, so as to realize a soft turn-on of the switch.

In some embodiments, the present disclosure further provides a control method that is applicable to the power conversion module provided in the above embodiments. The control method includes the following steps.

In step S1, the switching unit is controlled to cause the current flowing through the branch connecting the midpoint of the first bridge arm and the midpoint of the second bridge arm to be in the opposite direction of the current flowing through the first side of the first power unit before one of the switches in the first bridge arm and the second bridge arm is turned on, so as to realize a soft turn-on of the switch.

Referring to FIG. 12, the step S1 will be illustrated in detail below in conjunction with the structure shown in FIG. 12.

As shown in FIG. 12, the second terminal of the first side of the first power unit is connected to the midpoint of the first bridge arm, and the first terminal of the first side of the second power unit is connected to the midpoint of the second bridge arm.

The third bridge arm of the switching unit is connected in parallel with the first capacitor unit. The fourth bridge arm is connected in parallel with the second capacitor unit. The resonant capacitor is connected between the midpoint of the third bridge arm and the midpoint of the fourth bridge arm. The first bridge arm includes an upper switch S11 and a lower switch S12 connected in series. The second bridge arm includes an upper switch S21 and a lower switch S22 connected in series. The third bridge arm includes an upper switch P11 and a lower switch P12 connected in series. The fourth bridge arm includes an upper switch P21 and a lower switch P22 connected in series.

When the current $ig$ flows in from the first terminal of the first side of the first power unit, the step S1 includes the following steps:

in step S11, the upper switch P11 of the third bridge arm is turned on before the upper switch S11 of the first bridge arm is turned on, and the upper switch P21 of the fourth bridge arm is turned on after the upper switch S11 of the first bridge arm is switched from off to on, such that a soft turn-on of the upper switch S11 of the first bridge arm is achieved; or

in step S12, the upper switch P21 of the fourth bridge arm is turned on before the upper switch S11 of the first bridge arm is turned on, and the upper switch P11 of the third bridge arm is turned on after the upper switch S11 of the first bridge arm is switched from off to on, such that the soft turn-on of the upper switch S11 of the first bridge arm is achieved; or

in step S13, the upper switch P11 of the third bridge arm is turned off before the upper switch S11 of the first bridge arm is turned on, and the upper switch P21 of the fourth bridge arm is turned off after the upper switch S 11 of the first bridge arm is switched from off to on, such that the soft turn-on of the upper switch S11 of the first bridge arm is achieved; or

in step S14, the upper switch P21 of the fourth bridge arm is turned off before the upper switch S11 of the first bridge arm is turned on, and the upper switch P11 of the third bridge arm is turned off after the upper switch S11 of the first bridge arm is switched from off to on, such that the soft turn-on of the upper switch S11 of the first bridge arm is achieved.

When the current flows out from the first terminal of the first side of the first power unit, the step S1 includes the following steps:

in step S15, the upper switch P11 of the third bridge arm is turned on before the lower switch S12 of the first bridge arm is turned on, and the upper switch P21 of the fourth bridge arm is turned on after the lower switch S12 of the first bridge arm is switched from off to on, such that the soft turn-on of the lower switch S12 of the first bridge arm is achieved; or

in step S16, the upper switch P21 of the fourth bridge arm is turned on before the lower switch S12 of the first bridge arm is turned on, and the upper switch P11 of the third bridge arm is turned on after the lower switch S12 of the first bridge arm is switched from off to on, such that the soft turn-on of the lower switch S12 of the first bridge arm is achieved; or

in step S17, the upper switch P11 of the third bridge arm is turned off before the lower switch S12 of the first bridge arm is turned on, and the upper switch P21 of the fourth bridge arm is turned off after the lower switch S12 of the first bridge arm is switched from off to on, such that the soft turn-on of the lower switch S12 of the first bridge arm is achieved; or

in step S18, the upper switch P21 of the fourth bridge arm is turned off before the lower switch S12 of the first bridge arm is turned on, and the upper switch P11 of the third bridge arm is turned off after the lower switch S12 of the first bridge arm is switched from off to on, such that the soft turn-on of the lower switch S12 of the first bridge arm is achieved.

Specifically, in the process of injecting resonant current into the interconnecting branch to complete the pre-stage zero voltage switching (ZVS) commutation, the optimal switching sequence can effectively reduce the current and voltage oscillation of the resonant circuit during the soft switching process, and improve the power density. Therefore, the present disclosure first analyzes the switching mode of the resonant circuit to obtain the optimal switching process. In the structure shown in FIG. 12, the switch S11 and the switch S22 have the same mode, and the switch S12 and the switch S21 have the same mode. The modal analysis and switching process of the present disclosure will be illustrated below by taking the input current $ig$, which is greater than zero, and the switch S11 as an example.

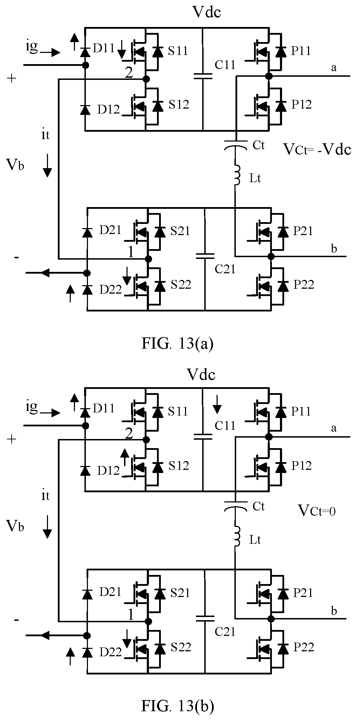

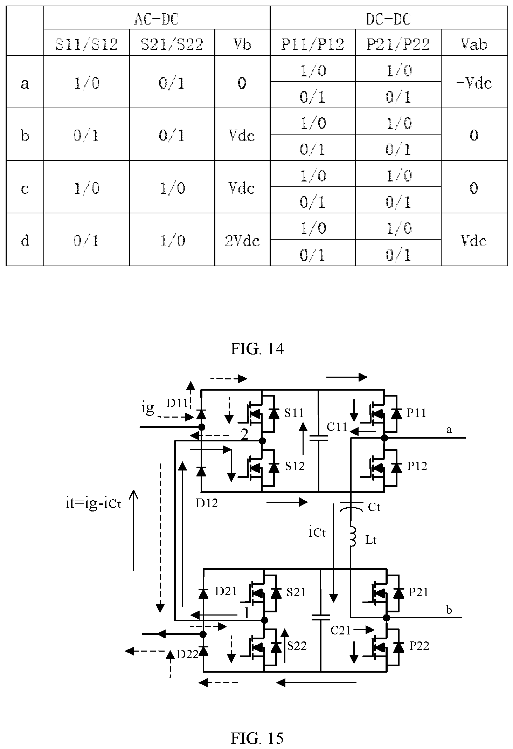

Please refer to FIGS. 13(a)-(d) and FIG. 14. FIGS. 13(a)-(d) show schematic diagrams of pre-stage working circuits during a steady-state process, and FIG. 14 is a diagram illustrating a comparison of the modes of the pre-stage and the post-stage. The voltage $Vdc$ is the port voltage of the resonant tank. That is to say, the voltages across the capacitor C11 and capacitor C21 in FIGS. 13(a)-(d) are both $Vdc$. $Vab$ is the voltage between the common connection point $a$ of the switch P11 and the switch P12 and the common connection point $b$ of the switch P21 and the switch P22 in FIGS. 13(a)-(d).

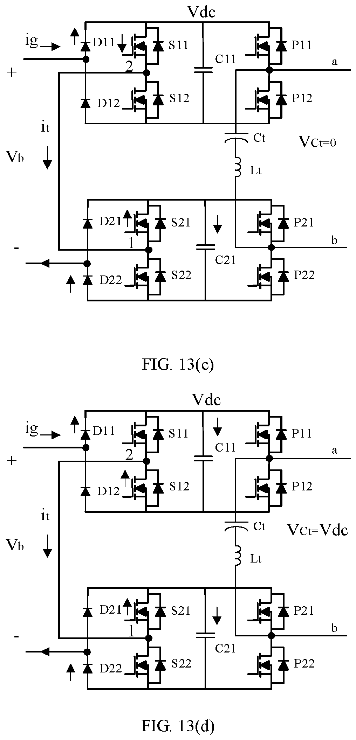

During the steady-state process, in the pre-stage circuit shown in FIG. 13(a), the input current flows sequentially through the diode D11, the switch S11, the switch S22, and finally flows out from the diode D22. In the pre-stage circuit shown in FIG. 13(b), the input current flows sequentially through the diode D11, the capacitor C11, the switch S12, the switch S22, and finally flows out from the diode D22. In the pre-stage circuit shown in FIG. 13(c), the input current flows sequentially through the diode D11, the switch 511, the switch S21, the capacitor C21, and finally flows out from the diode D22. In the pre-stage circuit shown in FIG. 13(d), the input current flows sequentially through the diode D11, the capacitor C11, the switch S12, the switch S21, the capacitor C21, and finally flows out from the diode D22.

It can be seen that during the commutation process of the switches in the pre-stage bridge arm, in the case without resonant current, when the grid-side current $it$ is greater than 0, the switch S12 and switch S21 can naturally realize ZVS turn-on, while the switch S11 and switch S22 cannot naturally realize ZVS turn-on. Similarly, when the grid-side current $it$ is less than 0, the switch S11 and switch S22 can naturally realize ZVS turn-on, while the switch S12 and switch S21 cannot naturally realize ZVS turn-on. The voltage $Vab$ and the voltage $Vet$ of the resonant capacitor will change when the pre-stage switches are in different modes and the post-stage switches work synchronously (i.e., the switches P11 and P12 are turned on and off at the same time), and the voltage $Vet$ of the resonant capacitor is only affected by the states of the pre-stage switches and not by the states of the post-stage switches. Therefore, based on this analysis, the ZVS turn-on of the switch S11 and switch S22 and the state change of the interconnected resonant capacitor need to be completed to realize the pre-stage bridge arm commutation.

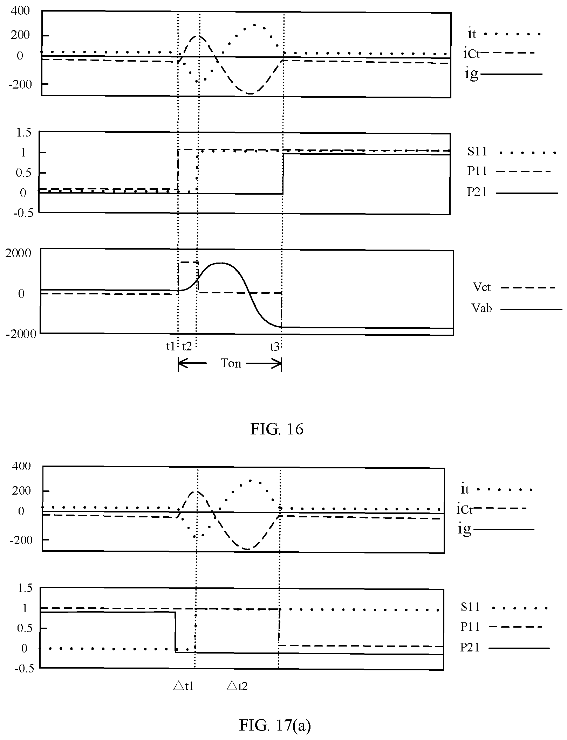

Please refer to FIG. 15 and FIG. 16. FIG. 15 is a schematic diagram of a current loop from time point $t1$ to time point $t2$ when the switching sequence of the pre-stage and post-stage modules is P11→S11→P21 during the turn-on process. FIG. 16 is a simulation diagram of the turn-on process of the switch S11. The direction indicated by the dotted arrow in FIG. 15 is the flow path of the input current $ig$, which sequentially flows through the diode D11, the switch S11, the switch S22, and the diode D22. When the switch P11 is turned on at the time point $t1$, the voltage $Vab$ changes, generating a resonant current $iCt$, which is superimposed with the input current $ig$ to generate a reverse current $it$. At this time, the direction of the current is indicated by the solid arrow in FIG. 15, that is, the current flows through the switch P11, the resonant capacitor Ct, the resonant inductor Lt, the switch P22, the switch S22, the switch S12, and the capacitor C11. The value of the reverse current satisfies the formula $it=ig-iCt$. The switch S11 is turned on at the time point $t2$. At this time, the cascade side current $it$ is less than 0, the resonant current meets the ZVS condition of the switch S11, and soft turn-on of the switch S11 can be achieved. When the voltage $Vab$ changes, the resonant current also changes. The switch P21 is turned on at time point $t3$. At this time, the voltage of the resonant capacitor just changes from 0 to -$Vdc$, without unnecessary current and voltage oscillates. With the above solution, during the process in which both the switch P11 and switch P21 are turned on, by controlling the turn-on sequence of the switch P11 and switch P21, the pre-stage switch S11 can be assisted to achieve the soft switching process. At this time, the switching frequency of the post-stage is greater than that of the pre-stage.

Furthermore, in this embodiment, the ZVS turn-on process of the switch S11 can also be implemented when the switch P11 and the switch P21 are turned off, and the switching sequence of the switch P11 and the switch P21 can also be different.

In some embodiments, an inductor can be added in the circuits as shown in FIGS. 1 to 13(d) and FIG. 15. The inductor is connected in series with the first side of the first power unit and the first side of the second power unit, and then connected to the power grid or other input source.

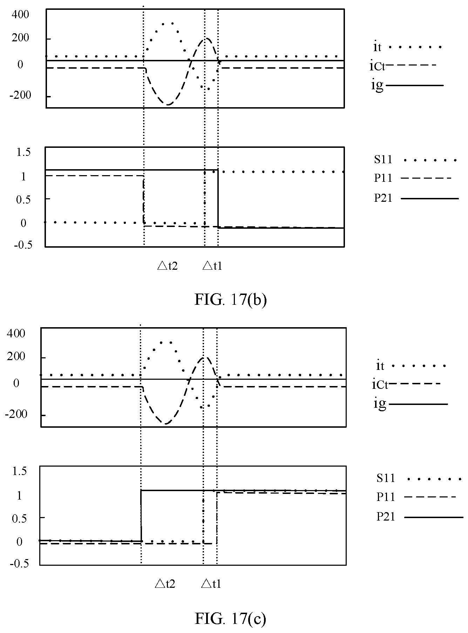

Referring to FIGS. 17(a)-(c), which are schematic simulation diagrams of a turn-off process of the switch S11 under different switching sequences. FIG. 17(a) and FIG. 17(b) show the ZVS turn-on process of the switch S11 when the switch P11 and switch P21 are turned off, respectively. The switching sequence in FIG. 17(a) is P21→S11→P11, and the switching sequence in FIG. 17(b) is P11→S11→P21. FIG. 17(c) shows the ZVS turn-on process of the switch S11 when the switch P11 and switch P21 are turned on, and the switching sequence is P21→S11→P11.

In the above embodiment, the asynchronous action of the switches P11 and P12 causes the voltage $Vab$ to change, generating a resonant current. The resonant current is superimposed with the input current, thereby generating a reverse current, which can assist the pre-stage switch S11 in completing the soft switching process. In addition, the timing can also be optimized in the present disclosure to better realize the ZVS turn-on of the pre-stage and prevent oscillation.

In some embodiments, in the step S11, the upper switch P11 of the third bridge arm is turned on at T/6 before the upper switch S11 of the first bridge arm is turned on, and the upper switch P21 of the fourth bridge arm is turned on at $2 \times T/3$ after the upper switch S11 of the first bridge arm is switched from off to on. T is the working cycle of the upper switches and the lower switches of the third bridge arm and the fourth bridge arm.

In the step S12, the upper switch P21 of the fourth bridge arm is turned on at $2 \times T/3$ before the upper switch S11 of the first bridge arm is turned on, and the upper switch P11 of the third bridge arm is turned on at T/6 after the upper switch S11 of the first bridge arm is switched from off to on.

In the step S13, the upper switch P11 of the third bridge arm is turned off at $2 \times T/3$ before the upper switch S11 of the first bridge arm is turned on, and the upper switch P21 of the fourth bridge arm is turned off at T/6 after the upper switch S11 of the first bridge arm is switched from off to on.

In the step S14, the upper switch P21 of the fourth bridge arm is turned off at T/6 before the upper switch S11 of the first bridge arm is turned on, and the upper switch P11 of the fourth bridge arm is turned off at $2 \times T/3$ after the upper switch S11 of the first bridge arm is switched from off to on.

In the step S15, the upper switch P11 of the third bridge arm is turned on at $2 \times T/3$ before the lower switch S12 of the first bridge arm is turned on, and the upper switch P21 of the fourth bridge arm is turned on at T/6 after the lower switch S12 of the first bridge arm is switched from off to on.

In the step S16, the upper switch P21 of the fourth bridge arm is turned on at T/6 before the lower switch S12 of the first bridge arm is turned on, and the upper switch P11 of the third bridge arm is turned on at $2 \times T/3$ after the lower switch of the first bridge arm is switched from off to on.

In the step S17, the upper switch P11 of the third bridge arm is turned off at T/6 before the lower switch S12 of the first bridge arm is turned on, and the upper switch P21 of the fourth bridge arm is turned off at $2 \times T/3$ after the lower switch S12 of the first bridge arm is switched from off to on.

In the step S18, the upper switch P21 of the fourth bridge arm is turned off at $2 \times T/3$ before the lower switch S12 of the first bridge arm is turned on, and the upper switch P11 of the third bridge arm is turned off at T/6 after the lower switch S12 of the first bridge arm is switched from off to on.

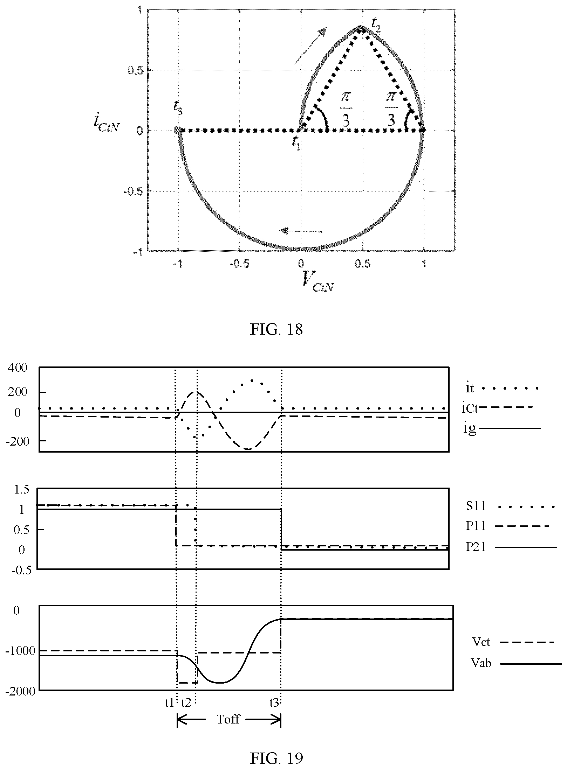

Specifically, please refer to FIG. 18. FIG. 18 is a schematic diagram of a state trajectory of the resonant circuit during the turn-on process of the switch S11. The turn-on current of the switch S11 and the turn-on time interval during the turn-on process can be calculated based on the state trajectory. $V_{CtN}$ in FIG. 18 represents the per-unit value of the resonant capacitor voltage and satisfies the following formula:

$$V_{CtN} = \frac{V_{ct}}{V_{dc}}$$

where $V_{ct}$ represents the actual resonant capacitor voltage, and $V_{dc}$ represents the voltages of the capacitors C11 and C21.

$I_{CtN}$ represents the per-unit value of the resonant inductor current and satisfies the following formula:

$$I_{CtN} = \frac{V_{dc}}{\sqrt{\frac{L_t}{C_t}}}$$

The turn-on current $I_{on}$ can be calculated according to the following formula:

$$I_{on} = I_g(t) - \sqrt{3}\pi f_t V_{dc} C_t \qquad (1)$$

The turn-on time interval $T_{on}$ can be calculated according to the following formula:

$$T_{on} = \frac{5}{6}T_t = \Delta t_{12} + \Delta t_{23}, \begin{cases} \Delta t_{12} = t_2 - t_1 = \frac{1}{6}T_t \\ \Delta t_{23} = t_3 - t_2 = \frac{2}{3}T_t \end{cases} \qquad (2)$$

The relationship between the resonant frequency $f_t$ and the cycle $T_t$ of the resonant circuit is:

$$f_t = \frac{1}{T_t} = \frac{1}{2\pi\sqrt{L_t C_t}} \qquad (3)$$

In this case, $\Delta t_1$ and $\Delta t_2$ in FIGS. 17(a)-(c) can be calculated according to the following formula respectively:

$$\begin{cases} \Delta t_1 = \frac{1}{6} T_t \\ \Delta t_2 = \frac{2}{3} T_t \end{cases} \qquad (4)$$

where $L_t$ is the inductance value of the resonant inductor, $C_t$ is the capacitance value of the resonant capacitor, and $T_t$ is the operating cycle of the switch S11.

Controlling the on and off of the third bridge arm and the fourth bridge arm based on the above-mentioned turn-on time interval facilitates a smooth voltage change on the resonant capacitor, preventing unnecessary current and voltage oscillations, and improving the power conversion efficiency.

In some embodiments, the control method provided in the embodiments of the present disclosure is also configured to detect the action time of the pre-stage switch. If an action of the pre-stage switch is detected at time *t1*, the next action time *t2* can be predicted based on the above-mentioned turn-on time interval.

When current flows in from the first terminal of the first side of the first power unit, the step S1 further includes the following steps:

in step S101, it is detected whether the upper switch of the first bridge arm is switched from off to on, and if it is detected that the upper switch of the first bridge arm is switched from off to on at a first time point, the next time point when the upper switch of the first bridge arm is switched from off to on is predicted based on the first time point; or

in step S102, it is detected whether the upper switch of the first bridge arm is switched from off to on, and if it is detected that the upper switch of the first bridge arm is switched from off to on at the first time point, the next time point when the upper switch of the first bridge arm is switched from on to off is predicted based on the first time point.

When the current flows out from the first terminal of the first side of the first power unit, the step S1 further includes the following steps:

in step S103, it is detected whether the lower switch of the first bridge arm is switched from off to on, and if it is detected that the lower switch of the first bridge arm is switched from off to on at the first time point, the next time point when the lower switch of the bridge arm is switched from off to on is predicted based on the first time point; or

in step S104, it is detected whether the lower switch of the first bridge arm is switched from off to on, and if it is detected that the lower switch of the first bridge arm is switched from off to on at the first time point, the next time point when the lower switch of the first bridge arm is switched from on to off is predicted based on the first time point.

In the above embodiment, the next action time point is predicted by detecting the action time point of the pre-stage switch, achieving precise control of the on and off of the pre-stage and post-stage switches, and further improving the power conversion efficiency.

In some embodiments, the control method provided in the embodiment of the present disclosure also includes a step S2.

In step S2, the switching unit is controlled to reduce voltage oscillation across the resonant capacitor after one of the switches in the first bridge arm and the second bridge arm is turned off.

Referring to FIG. 19, which is a schematic simulation diagram of the turn-off process of the switch S11. Based on the above analysis of the steady-state process, the voltage on the resonant capacitor will also change after the switch S11 is turned off. Therefore, mode control is also required for the turn-off process of the switch S11 to ensure a smooth voltage change on the resonant capacitor and prevent unnecessary current and voltage oscillations. The turn-off process is similar to the turn-on process. The turn-off sequence shown in FIG. 19 is P11→S11→P21. When the switch P11 is turned off at time point *t1*, the voltage across the resonant tank changes, generating a resonant current *iCt,* which is superimposed with the input current. A soft turn-on can also be achieved by turning off the switch S11 and turning on the switch S12 at time point *t2*. The switch P21 is turned off at time point *t3*. At this time, the voltage of the resonant capacitor changes from -*Vdc* to 0, without unnecessary oscillation.

Referring to FIG. 12, step S2 will be described in detail below in conjunction with the structure shown in FIG. 12.

When the current *ig* flows in from the first terminal of the first side of the first power unit, the step S2 includes the following steps:

in step S21, one of the upper switch P11 of the third bridge arm and the upper switch P21 of the fourth bridge arm is turned on before the upper switch S11 of the first bridge arm is turned off, and the other one of the upper switch P11 of the third bridge arm and the upper switch P21 of the fourth bridge arm is turned on after the upper switch S11 of the first bridge arm is switched from on to off; or

in step S22, the upper switch P11 of the third bridge arm and the upper switch P21 of the fourth bridge arm are turned on asynchronously before the upper switch S11 of the first bridge arm is turned off; or

in step S23, the upper switch P11 of the third bridge arm and the upper switch P21 of the fourth bridge arm are turned on asynchronously after the upper switch S11 of the first bridge arm is turned off; or

in step S24: one of the upper switch P11 of the third bridge arm and the upper switch P21 of the fourth bridge arm is turned off before the upper switch S11 of the first bridge arm is turned off, and the other one of the upper switch P11 of the third bridge arm and the upper switch P21 of the fourth bridge arm is turned off after the upper switch S11 of the first bridge arm is switched from on to off; or

in step S25, the upper switch P11 of the third bridge arm and the upper switch P21 of the fourth bridge arm are turned off asynchronously before the upper switch S11 of the first bridge arm is turned off; or

in step S26, the upper switch P11 of the third bridge arm and the upper switch P21 of the fourth bridge arm are turned off asynchronously after the upper switch S11 of the first bridge arm is turned off.

When current flows out from the first terminal of the first side of the first power unit, the step S2 includes the following steps:

in step S27, one of the upper switch P11 of the third bridge arm and the upper switch P21 of the fourth bridge arm is turned on before the lower switch S12 of the first bridge arm is turned off, and the other one of the upper switch P11 of the third bridge arm and the upper switch P21 of the fourth bridge arm is turned on after the upper switch S11 of the first bridge arm is switched from on to off; or

in step S28, the upper switch P11 of the third bridge arm and the upper switch P21 of the fourth bridge arm are turned on asynchronously before the lower switch S12 of the first bridge arm is turned off; or

in step S29, the upper switch P11 of the third bridge arm and the upper switch P21 of the fourth bridge arm are turned on asynchronously after the lower switch S12 of the first bridge arm is turned off; or

in step S30, one of the upper switch P11 of the third bridge arm and the upper switch P21 of the fourth bridge arm is turned off before the lower switch S12 of the first bridge arm is turned off, one of the upper switch P11 of the third bridge arm and the upper switch P21 of the fourth bridge arm is turned off after the upper switch S11 of the first bridge arm is switched from on to off; or

in step S31, the upper switch P11 of the third bridge arm and the upper switch P21 of the fourth bridge arm are turned off asynchronously before the lower switch S12 of the first bridge arm is turned off; or

in step S32, the upper switch P11 of the third bridge arm and the upper switch P21 of the fourth bridge arm are turned off asynchronously after the lower switch S12 of the first bridge arm is turned off.

In some embodiments, in the step S21, the time interval between the turn-on time point of the upper switch of the third bridge arm and the turn-on time point of the upper switch of the fourth bridge arm is $5\times T/6$, and the time interval between the turn-on time point of the upper switch of the third bridge arm and the turn-off time point of the upper switch of the first bridge arm is $2\times T/3$.

In the step S22, the time interval between the turn-on time point of the upper switch of the third bridge arm and the turn-on time point of the upper switch of the fourth bridge arm is $5\times T/6$ or $T/6$, and the time interval between the turn-on time point of the upper switch of the third bridge arm and the turn-off time point of the upper switch of the first bridge arm is $T/3$.

In the step S23, the time interval between the turn-on time point of the upper switch of the third bridge arm and the turn-on time point of the upper switch of the fourth bridge arm is $T/3$ or $T/6$, and the time interval between the turn-on time of the upper switch of the third bridge arm and the turn-off time point of the upper switch of the first bridge arm is $T/3$ or $5\times T/6$.

In the step S24, the time interval between the turn-off time point of the upper switch of the third bridge arm and the turn-off time point of the upper switch of the fourth bridge arm is $5\times T/6$, and the time interval between the turn-off time point of the upper switch of the third bridge arm and the turn-off time point of the upper switch of the first bridge arm is $T/6$.

In the step S25, the time interval between the turn-off time point of the upper switch of the third bridge arm and the turn-off time point of the upper switch of the fourth bridge arm is $5\times T/6$ or $T/6$, and the time interval between the turn-off time point of the upper switch of the third bridge arm and the turn-off time point of the upper switch of the first bridge arm is $T/6$.

In the step S26, the time interval between the turn-off time point of the upper switch of the third bridge arm and the turn-off time point of the upper switch of the fourth bridge arm is $T/3$ or $T/6$, and the time interval of the turn-off time point of the upper switch of the third bridge arm and the turn-off time point of the upper switch of the first bridge arm is $T/6$.

In the step S27, the time interval between the turn-on time point of the upper switch of the third bridge arm and the turn-on time point of the upper switch of the fourth bridge arm is $5\times T/6$, and the time interval between the turn-on time point of the upper switch of the third bridge arm and the turn-off time point of the upper switch of the first bridge arm is T/6.

In the step S28, the time interval between the turn-on time point of the upper switch of the third bridge arm and the turn-on time point of the upper switch of the fourth bridge arm is 5×T/6 or T/6, and the time interval between the turn-on time point of the upper switch of the third bridge arm and the turn-off time point of the upper switch of the first bridge arm is T/6.

In the step S29, the time interval between the turn-on time point of the upper switch of the third bridge arm and the turn-on time point of the upper switch of the fourth bridge arm is T/3 or T/6, and the time interval between the turn-on time point of the upper switch of the third bridge arm and the turn-off time point of the upper switch of the first bridge arm is T/6;

In the step S30, the time interval between the turn-off time point of the upper switch of the third bridge arm and the turn-off time point of the upper switch of the fourth bridge arm is 5×T/6, and the time interval of the turn-off time point of the upper switch of the third bridge arm and the turn-off time point of the upper switch of the first bridge arm is 2×T/3;

In the step S31, the time interval between the turn-on time point of the upper switch of the third bridge arm and the turn-on time point of the upper switch of the fourth bridge arm is 5×T/6 or T/6, and the time interval between the turn-off time point of the upper switch of the third bridge arm and the turn-off time point of the upper switch of the first bridge arm is T/3.

In the step S32, the time interval between the turn-off time point of the upper switch of the third bridge arm and the turn-off time point of the upper switch of the fourth bridge arm is T/3 or T/6, and the time interval between the turn-off time point of the upper switch of the third bridge arm and turn-off time point of the upper switch of the first bridge arm is T/3 or 5×T/6.

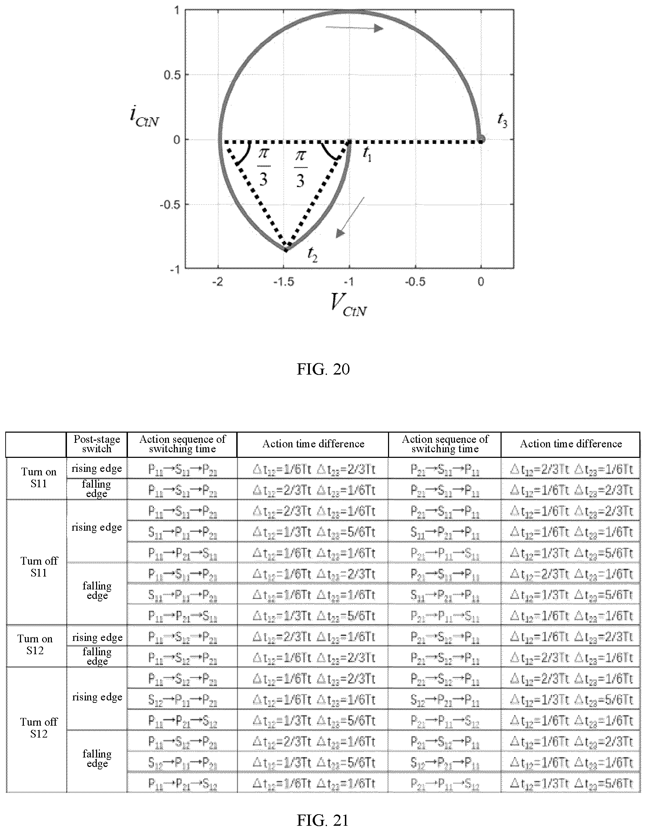

Specifically, referring to FIG. 20, which is a schematic diagram of a state trajectory of the resonant circuit during the turn-off process of the switch S11. The turn-off current of the switch S11 and the turn-off time interval during the turn-off process can be calculated based on the state trajectory.

The turn-off current can be calculated according to the following formula:

$$I_{off} = I_g(t) + \sqrt{3}\pi f_t V_{dc} C_t \qquad (5)$$

The turn-off time interval can be calculated according to the following formula:

$$T_{off} = \frac{5}{6}T_t = \Delta t_{12} + \Delta t_{23}, \begin{cases} \Delta t_{12} = t_2 - t_1 = \frac{1}{6}T_t \\ \Delta t_{23} = t_3 - t_2 = \frac{2}{3}T_t \end{cases} \qquad (6)$$

Controlling the on and off of the third bridge arm and the fourth bridge arm based on the above-mentioned turn-off time interval facilitates a smooth voltage change on the resonant capacitor, preventing unnecessary current and voltage oscillations, and improving the power conversion efficiency.

In some embodiments, before performing real-time control on the power conversion module to achieve the purpose of the soft turn-on of the pre-stage, an appropriate turn-on time $T_{on}$ is also selected based on the working frequency of the pre-stage and post-stage. Then, a resonant frequency of the interconnecting branch is calculated according to the formula (2) and formula (6). Finally, the capacitance value of the resonant capacitor and the inductance value of the resonant inductor are determined based on the known turn-on current $I_{on}$, the formula (1) and formula (5).

In some embodiments, the control method provided in the embodiments of the present disclosure is also configured to detect the action time of the pre-stage switch. If an action of the pre-stage switch is detected at time *t1*, the next action time *t2* is predicted based on the above-mentioned turn-on time interval.

When current flows in from the first terminal of the first side of the first power unit, the step S2 further includes the following steps S201 and S202.

In step S201, it is detected whether the upper switch of the first bridge arm is switched from on to off, and if it is detected that the upper switch of the first bridge arm is switched from on to off at a first time point, the next time point when the upper switch of the bridge arm is switched from on to off is predicted based on the first time point; or

In step S202, it is detected whether the upper switch of the first bridge arm switches from on to off, and if it is detected that the upper switch of the first bridge arm is switched from on to off at a first time point, the next time point when the upper switch is switched from off to on is predicted based on the first time point.

When current flows out from the first terminal of the first side of the first power unit, the step S2 further includes the following steps:

in step S203, it is detected whether the lower switch of the first bridge arm is switched from on to off, and if it is detected that the lower switch of the first bridge arm is switched from on to off at a first time point, the next time point when the lower switch of the first bridge arm is switched from on to off is predicted based on the first time point; or

in step S204, it is detected whether the lower switch of the first bridge arm is switched from on to off, and if it is detected that the lower switch of the first bridge arm is switched from on to off at a first time point, the next time point when the lower switch of the first bridge arm is switched from off to on is predicted based on the first time point.

In the above embodiment, the next action time point is predicted by detecting the action time point of the pre-stage switch, achieving precise control of the on and off of the pre-stage and post-stage switches, and further improving the power conversion efficiency.

Referring to FIG. 21, it should be noted that, similar to the turn-on process, the turn-off process of the switch S11 can also be achieved during the turn-on and turn-off processes of the switches P11 and P21, and does not affect the ZVS turn-on of the switch S12. The same principle can be applied to the case that the input current *ig* is less than 0. For example, FIG. 21 shows switching sequences and time intervals of the switches S11 and S12 to achieve soft switching. The ZVS and resonant capacitor mode conversion can be quickly achieved according to the time shown in FIG. 21. In addition, since the resonance is a periodic change, the time difference for each action can be increased by an integer number of resonance cycles based on the action time shown in the table in FIG. 21, i.e., by adding n×Tt resonance cycles.

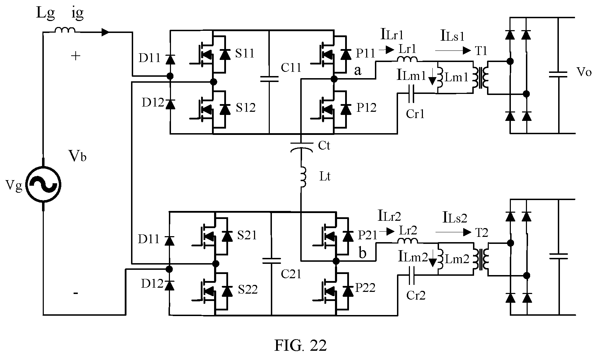

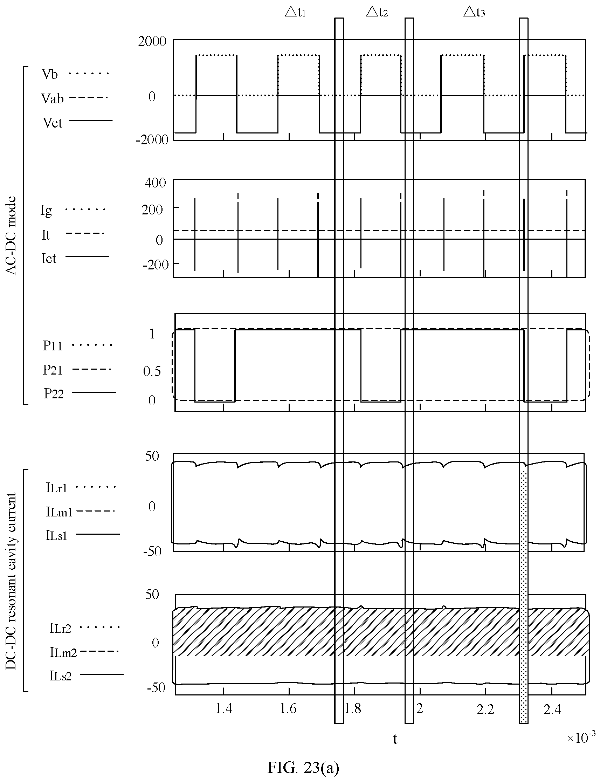

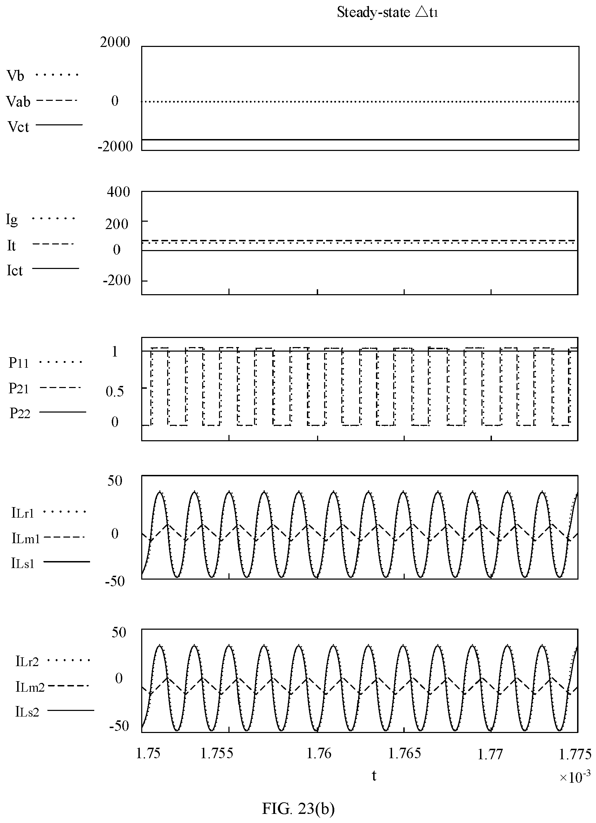

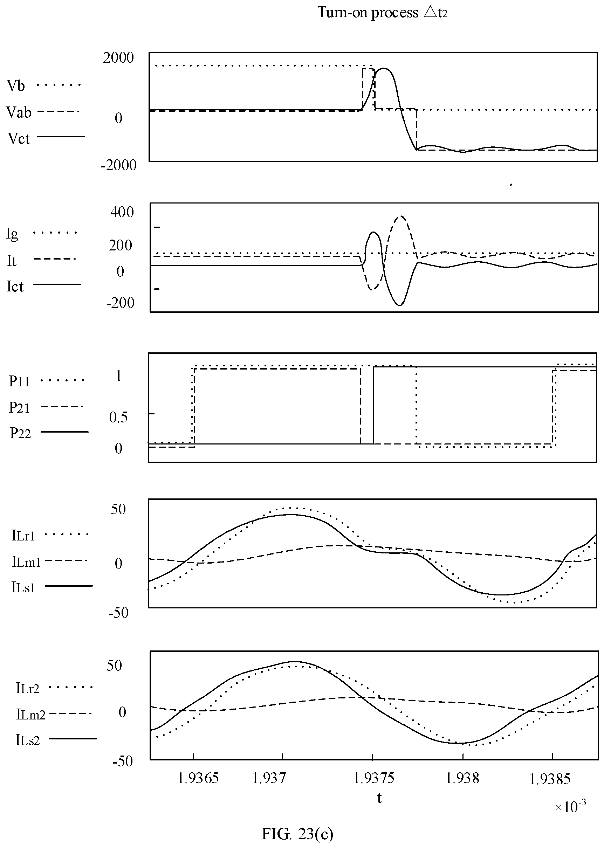

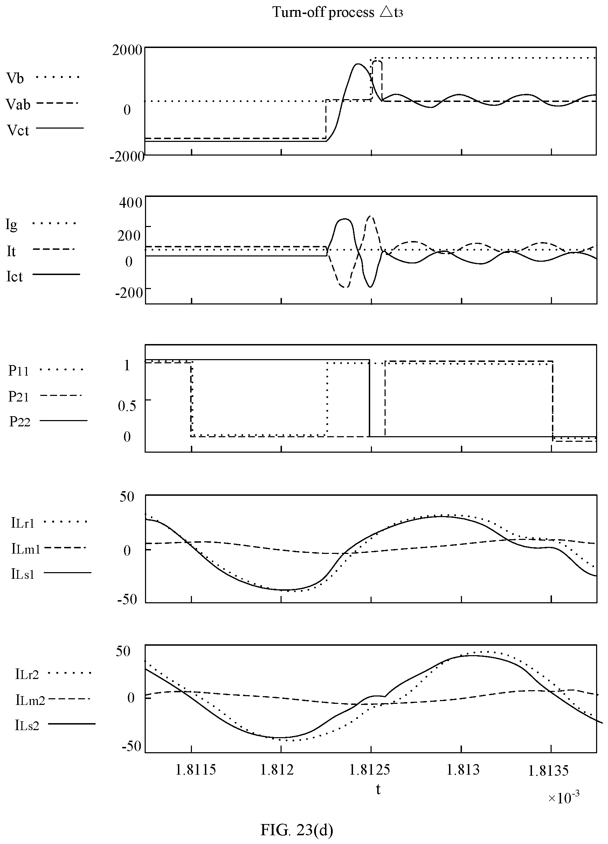

Please refer to FIG. 22 and FIGS. 23(a)-(d). FIG. 22 shows a two-stage topology. FIGS. 23(a)-(d) are simulation diagrams of the topology shown in FIG. 22. FIG. 23(a) is an overall simulation diagram of the steady-state process, turn-on process, and turn-off process of the switch S11. FIG. 23(b) is a partial enlarged view of the steady-state process. FIG. 23(c) is a partial enlarged view of the turn-on process. FIG. 23(d) is a partial enlarged view of the turn-off process. *Ilr1* and *Ilr2* represent the post-stage resonant tank currents, i.e., the primary side currents of the transformers. *Ilm1* and *Ilm2* represent the currents flowing through the excitation inductors of the transformers. *Ils1* and *Ils2* represent the currents flowing through the secondary sides of the transformers. According to FIGS. 23(a)-(d), by analyzing the steady-state process, the turn-on process, and the turn-off process of the switch S11 comprehensively, it can be seen that the switching process of the present disclosure is completed within half a cycle of the post-stage switch, without affecting the input current and the ZVS of the post-stage switch. In addition, the resonant current only circulates between the pre-stage circuit and the post-stage circuit, without affecting the input current and the system EMI. Furthermore, in this embodiment, the current in the interconnecting branch significantly changes only during switching, reducing the increase in on-state loss, requiring a small capacitance, and improving the power density.

In the above control method, an interconnecting branch and a resonant inductor are provided between the first power unit and the second power unit. The interconnecting branch includes a resonant capacitor and a switching unit that are electrically connected. The resonant inductor is connected between the midpoint of the first bridge arm and the midpoint of the second bridge arm, or in series with the resonant capacitor. In the present disclosure, by controlling the on and off of the interconnecting branch, a current opposite to the power grid current is generated on the branch connecting the first bridge arm and the second bridge arm, thereby realizing the soft switching of the switching transistors of the power conversion module with a small number of auxiliary circuits, facilitating to improve the system efficiency.

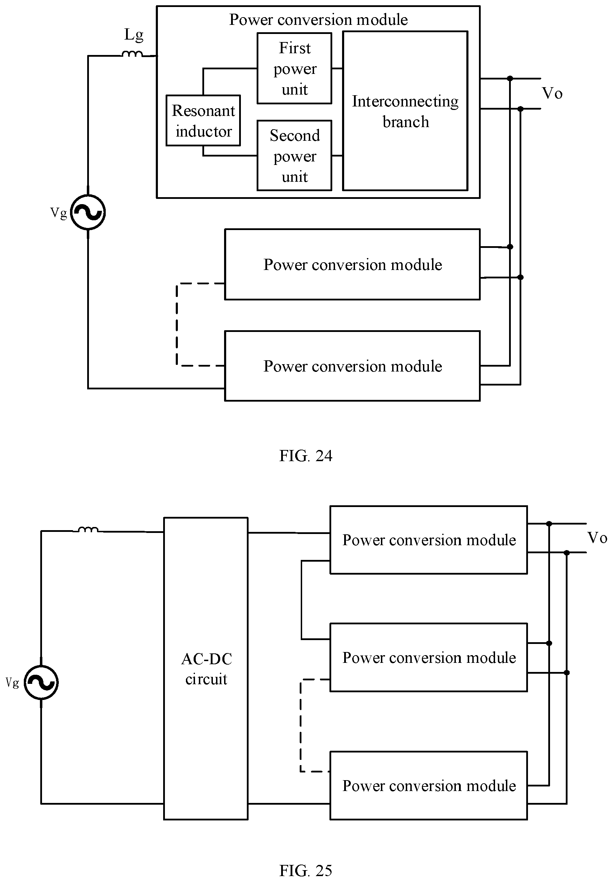

Referring to FIG. 24, in some embodiments, the present disclosure also provides a power conversion system, including N power conversion modules as provided in the above embodiments, where N is an integer greater than or equal to 1. The structure of the power conversion module has been described in detail in the above embodiments, and will not be repeated herein.

In some embodiments, the first side of the first power unit and the first side of the second power unit are connected in series to form the first side of the power conversion module. When the number *N* of the power conversion modules is greater than or equal to 2, the first sides of the *N* power conversion modules are connected in series and then connected to the power grid.

Referring to FIG. 25, in some embodiments, the power conversion system also includes an AC/DC circuit. In the case that there are a plurality of power conversion modules, the first sides of the N power conversion modules are connected in series and then connected to the DC side of the AC/DC circuit, while the AC side of the AC/DC circuit is connected to the power grid.

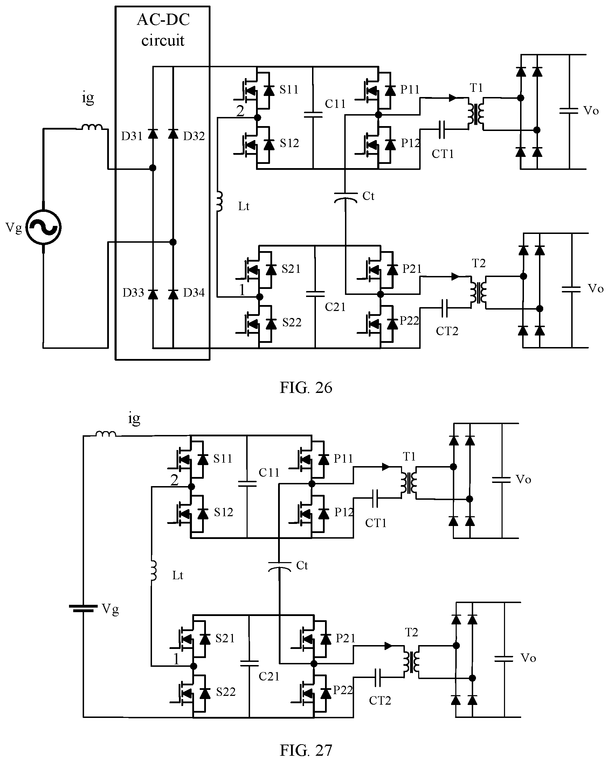

Referring to FIG. 26, in the case that there is one power conversion module, the first side of the first power unit and the first side of the second power unit are connected in series and then connected to the DC side of the AC-DC circuit, while the AC side of the AC-DC circuit is connected to the power grid, where N=1. The AC-DC circuit in FIG. 26 adopts a rectifier bridge. In this case, the pre-stage includes a line frequency rectification and a cascaded Boost. A capacitor is interconnected between the primary side bridge arms of the LLC resonant converter in the post-stage to assist resonance, thereby achieving the ZVS startup of the pre-stage Boost switch. In this embodiment, semiconductor devices can be flexibly selected according to the withstand voltage level and actual requirements.

Referring to FIG. 27, in another possible embodiment, the first side of the power conversion module can also be connected to a DC bus. In this case, the pre-stage is a cascaded DC-DC circuit. Based on the same principle, soft switching of the pre-stage switch can also be realized by controlling the on and off of the switching unit.

In the above power conversion system, an interconnecting branch and a resonant inductor are provided between the first power unit and the second power unit. The interconnecting branch includes a resonant capacitor and a switching unit electrically connected. The resonant inductor is connected between the midpoint of the first bridge arm and the midpoint of the second bridge arm, or in series with the resonant capacitor. In the present disclosure, by controlling the on and off of the interconnecting branch, a current opposite to the power grid current is generated on the branch connecting the first bridge arm and the second bridge arm, thereby realizing the soft switching of the switching transistors of the power conversion module with a small number of auxiliary circuits, facilitating to improve the system efficiency.

**Claims**

1. A power conversion module, comprising:

   a first power unit (10) comprising a first bridge arm (101), a first capacitor unit (102), a first side, and a second side, the second side of the first power unit (10) being connected to both ends of the first bridge arm (101), the first capacitor unit (102) being connected in parallel with the first bridge arm (101), the first capacitor unit (102) comprising a positive terminal and a negative terminal;
   a second power unit (20) comprising a second bridge arm (201), a second capacitor unit (202), a first side and a second side, the second side of the second power unit (20) being connected to both ends of the second bridge arm (201), the second capacitor unit (202) being connected in parallel with the second bridge arm (201), the second capacitor unit (202) comprising a positive terminal and a negative terminal, wherein a midpoint of the second bridge arm (201) and a midpoint of the first bridge arm (101) are interconnected to form a series connection of the first sides of the first power unit (10) and the second power unit (20);
   an interconnecting branch (30) connected between the second side of the first power unit (10) and the second side of the second power unit (20), and comprising a resonant capacitor (301) and a switching unit (302) that are electrically connected to each other; and
   a resonant inductor (40) connected between the midpoint of the first bridge arm (101) and the midpoint of the second bridge arm (201), or in series with the resonant capacitor (301).

2. The power conversion module according to claim 1, wherein the switching unit (302) comprises a first switch, which is connected in series with the resonant capacitor (301), and the interconnecting branch (30) is connected between the positive terminal of the first capacitor unit (102) and the negative terminal of the second capacitor unit (202).

3. The power conversion module according to claim 1, wherein the switching unit (302) comprises:

   a third bridge arm (3021) connected in parallel with the first capacitor unit (102); and
   a fourth bridge arm (3022) connected in parallel with the second capacitor unit (202), the resonant capacitor (301) being connected between a midpoint of the third bridge arm (3021) and a midpoint of the fourth bridge arm (3022).

4. The power conversion module according to claim 1, wherein:

   the first capacitor unit (102) comprises a first capacitor and a second capacitor connected in series;
   the second capacitor unit (202) comprises a third capacitor and a fourth capacitor connected in series; and
   the switching unit (302) comprises:

      a third bridge arm (3021) connected in parallel with the first capacitor;
      a fifth bridge arm connected in parallel with the second capacitor;
      a fourth bridge arm (3022) connected in parallel with the third capacitor, the resonant capacitor (301) being connected between the midpoint of the third bridge arm (3021) and the midpoint of the fourth bridge arm (3022); and
      a sixth bridge arm connected in parallel with the fourth capacitor.

5. The power conversion module according to claim 4, wherein:

   the first bridge arm (101) comprises a second switch, a third switch, a fourth switch, and a fifth switch that are connected in sequence, and the second bridge arm (201) comprises a sixth switch, a seventh switch, an eighth switch, and a ninth switch that are connected in sequence;
   the power conversion module further comprises a first diode, a second diode, a third diode, a fourth diode, a fifth diode, a sixth diode, a seventh diode, an eight diode, a first main power capacitor, a second main power capacitor, a first transformer, a second transformer, a first rectifier circuit, and a second rectifier circuit,
   wherein the first diode and the second diode are connected in series and then connected in parallel with the first bridge arm (101), a common connection point of the first diode and the second diode and the midpoint of the first bridge arm (101) are respectively connected to the first side of the first power unit (10), a cathode of the fifth diode is connected to a common connection point of the second switch and the third switch, an anode of the fifth diode is connected to a common connection point of the first capacitor and the second capacitor, an anode of the sixth diode is connected to a common connection point of the fourth switch and the fifth switch, a cathode of the sixth diode is connected to the common connection point of the first capacitor and the second capacitor, the first main power capacitor and a primary winding of the first transformer are connected in series and then connected between a midpoint of the third bridge arm (3021) and a midpoint of the fifth bridge arm, and the first rectifier circuit is connected to a secondary winding of the first transformer,

wherein the third diode and the fourth diode are connected in series and then connected in parallel with the second bridge arm (201), a common connection point of the third diode and the fourth diode and the midpoint of the second bridge arm (201) are respectively connected to the first side of the second power unit (20), a cathode of the seventh diode is connected to a common connection point of the sixth switch and the seventh switch, an anode of the seventh diode is connected to a common connection point of the third capacitor and the fourth capacitor, an anode of the eighth diode is connected to a common connection point of the eighth switch and the ninth switch, a cathode of the eighth diode is connected to the common connection point of the third capacitor and the fourth capacitor, the second main power capacitor and a primary winding of the second transformer are connected in series and then connected between the midpoint of the fourth bridge arm (3022) and a midpoint of the sixth bridge arm, and the second rectifier circuit is connected to a secondary winding of the second transformer.

6.  The power conversion module according to claim 1, wherein the positive terminal of the first capacitor unit (102) and the midpoint of the first bridge arm (101) are connected to the first side of the first power unit (10), and the negative terminal of the second capacitor unit (202) and the midpoint of the second bridge arm (201) are connected to the first side of the second power unit (20).

7.  The power conversion module according to claim 1, wherein the first power unit (10) comprises a seventh bridge arm, which is connected in parallel with the first bridge arm (101), and the midpoint of the first bridge arm (101) and a midpoint of the seventh bridge arm are connected to the first side of the first power unit (10), and

    the second power unit (20) comprises an eighth bridge arm, which is connected in parallel with the second bridge arm (201), and the midpoint of the second bridge arm (201) and a midpoint of the eighth bridge arm are connected to the first side of the second power unit (20).

8.  The power conversion module according to any one of claims 1 to 7, further comprising a control unit, wherein the control unit controls the switching unit (302) to cause, before one of the switches in the first bridge arm (101) and the second bridge arm (201) is turned on, a current flowing through a branch connecting the midpoint of the first bridge arm (101) and the midpoint of the second bridge arm (201) to be in an opposite direction of a current flowing through the first power unit (10) to achieve a soft turn-on of the switch.

9.  A control method for the power conversion module of claim 1, comprising:
    step S1: controlling the switching unit (302) to cause, before one of switches in the first bridge arm (101) and the second bridge arm (201) is turned on, a current flowing through a branch connecting the midpoint of the first bridge arm (101) and the midpoint of the second bridge arm (201) to be in an opposite direction of a current flowing through the first side of the first power unit (10) to achieve a soft turn-on of the switch.

10. The control method according to claim 9, wherein the first side of the first power unit (10) and the first side of the second power unit (20) each comprise a first terminal and a second terminal, the second terminal of the first side of the first power unit (10) being connected to the midpoint of the first bridge arm (101), the first terminal of the first side of the second power unit (20) being connected to the midpoint of the second bridge arm (201),
    wherein the switching unit (302) comprises:

    a third bridge arm (3021) connected in parallel with the first capacitor unit (102); and
    a fourth bridge arm (3022) connected in parallel with the second capacitor unit (202), the resonant capacitor (301) being connected between a midpoint of the third bridge arm (3021) and a midpoint of the fourth bridge arm (3022), the first bridge arm (101), the second bridge arm (201), the third bridge arm (3021), and the fourth bridge arm (3022) each comprising an upper switch and a lower switch connected in series,
    wherein when current flows in from the first terminal of the first side of the first power unit (10), the step S1 comprises:

    step S11: turning on the upper switch of the third bridge arm (3021) before the upper switch of the first bridge arm (101) is turned on, and turning on the upper switch of the fourth bridge arm (3022) after the upper switch of the first bridge arm (101) is switched from off to on, such that a soft turn-on of the upper switch of the first bridge arm (101) is achieved; or

step S12: turning on the upper switch of the fourth bridge arm (3022) before the upper switch of the first bridge arm (101) is turned on, and turning on the upper switch of the third bridge arm (3021) after the upper switch of the first bridge arm (101) is switched from off to on, such that the soft turn-on of the upper switch of the first bridge arm (101) is achieved; or

step S13: turning off the upper switch of the third bridge arm (3021) before the upper switch of the first bridge arm (101) is turned on, and turning off the upper switch of the fourth bridge arm (3022) after the upper switch of the first bridge arm (101) is switched from off to on, such that the soft turn-on of the upper switch of the first bridge arm (101) is achieved; or

step S14: turning off the upper switch of the fourth bridge arm (3022) before the upper switch of the first bridge arm (101) is turned on, and turning off the upper switch of the third bridge arm (3021) after the upper switch of the first bridge arm (101) is switched from off to on, such that the soft turn-on of the upper switch of the first bridge arm (101) is achieved;

wherein when current flows out from the first terminal of the first side of the first power unit (10), the step S1 comprises:

step S15: turning on the upper switch of the third bridge arm (3021) before the lower switch of the first bridge arm (101) is turned on, and turning on the upper switch of the fourth bridge arm (3022) after the lower switch of the first bridge arm (101) is switched from off to on, such that a soft turn-on of the lower switch of the first bridge arm (101); or

step S16: turning on the upper switch of the fourth bridge arm (3022) before the lower switch of the first bridge arm (101) is turned on, and turning on the upper switch of the third bridge arm (3021) after the lower switch of the first bridge arm (101) is switched from off to on, such that the soft turn-on of the lower switch of the first bridge arm (101) is achieved; or

step S17: turning off the upper switch of the third bridge arm (3021) before the lower switch of the first bridge arm (101) is turned on, and turning off the upper switch of the fourth bridge arm (3022) after the lower switch of the first bridge arm (101) is switched from off to on, such that the soft turn-on of the lower switch of the first bridge arm (101) is achieved; or

step S18: turning off the upper switch of the fourth bridge arm (3022) before the lower switch of the first bridge arm (101) is turned on, and turning off the upper switch of the third bridge arm (3021) after the lower switch of the first bridge arm (101) is switched from off to on, such that the soft turn-on of the lower switch of the first bridge arm (101);

**11.** The control method according to claim 10, wherein:

in the step S11, the upper switch of the third bridge arm (3021) is turned on at T/6 before the upper switch of the first bridge arm (101) is turned on, the upper switch of the fourth bridge arm (3022) is turned on at $2 \times T/3$ after the upper switch of the first bridge arm (101) is switched from off to on, and T is a working cycle of the upper switches and the lower switches of the third bridge arm (3021) and the fourth bridge arm (3022);

in the step S12, the upper switch of the fourth bridge arm (3022) is turned on at $2 \times T/3$ before the upper switch of the first bridge arm (101) is turned on, and the upper switch of the third bridge arm (3021) is turned on at T/6 after the switch is switched from off to on;

in the step S13, the upper switch of the third bridge arm (3021) is turned off at $2 \times T/3$ before the upper switch of the first bridge arm (101) is turned on, and the upper switch of the fourth bridge arm (3022) is turned on at T/6 after the upper switch of the first bridge arm (101) is switched from off to on;

in the step S14, the upper switch of the fourth bridge arm (3022) is turned off at T/6 before the upper switch of the first bridge arm (101) is turned on, and the upper switch of the fourth bridge arm (3022) is turned off at $2 \times T/3$ after the upper switch of the first bridge arm (101) is switched from off to on;

in the step S15, the upper switch of the third bridge arm (3021) is turned on at $2 \times T/3$ before the lower switch of the first bridge arm (101) is turned on, and the upper switch of the fourth bridge arm is turned on at T/6 after the lower switch of the first bridge arm (101) is switched from off to on;

in the step S16, the upper switch of the fourth bridge arm (3022) is turned on at T/6 before the lower switch of the first bridge arm (101) is turned on, and the upper switch of the third bridge arm (3021) is turned on at $2 \times T/3$ after the lower switch of the first bridge arm (101) is switched from off to on;

in the step S17, the upper switch of the third bridge arm (3021) is turned off at T/6 before the lower switch of the first bridge arm (101) is turned on, and the upper switch of the fourth bridge arm (3022) is turned off at $2 \times T/3$ after the lower switch of the first bridge arm (101) is switched from off to on; and

in the step S18, the upper switch of the fourth bridge arm (3022) is turned off at $2 \times T/3$ before the lower switch of the first bridge arm (101) is turned on, and the upper switch of the third bridge arm (3021) is turned off at T/6 after the lower switch of the first bridge arm (101) is switched from off to on.

12. The control method according to claim 9, wherein the first side of the first power unit (10) and the first side of the second power unit (20) each comprises a first terminal and a second terminal, the second terminal of the first side of the first power unit (10) being connected to the midpoint of the first bridge arm (101), the first terminal of the first side of the second power unit (20) being connected to the midpoint of the second bridge arm (201),

wherein the switching unit (302) comprises:

a third bridge arm (3021) connected in parallel with the first capacitor unit (102); and
a fourth bridge arm (3022) connected in parallel with the second capacitor unit (202), the resonant capacitor (301) is connected between a midpoint of the third bridge arm (3021) and a midpoint of the fourth bridge arm (3022); the first bridge arm (101), the second bridge arm (201), the third bridge arm (3021), and the fourth bridge arm (3022) each comprise an upper switch and a lower switch connected in series,

wherein when current flows in from the first terminal of the first side of the first power unit (10), the step S1 comprises:

step S101: detecting whether the upper switch of the first bridge arm (101) is switched from off to on, and if it is detected that the upper switch of the first bridge arm (101) is switched from off to on at a first time point, predicting a next time point when the upper switch of the first bridge arm (101) is switched from off to on based on the first time point; or
step S102: detecting whether the upper switch of the first bridge arm (101) is switched from off to on, and if it is detected that the upper switch of the first bridge arm (101) switches from off to on at the first time point, predicting a next time point when the upper switch of the first bridge arm (101) is switched from on to off;

wherein when current flows out from the first terminal of the first side of the first power unit (10), the step S1 comprises:

step S103: detecting whether the lower switch of the first bridge arm (101) is switched from off to on, and if it is detected that the lower switch of the first bridge arm (101) is switched from off to on at the first time point, predicting a next time point when the lower switch of the first bridge arm (101) is switched from off to on based on the first time point; or
step S104, detecting whether the lower switch of the first bridge arm (101) is switched from off to on, and if it is detected that the lower switch of the first bridge arm (101) is switched from off to on at the first time point, predicting a next time point when the lower switch of the first bridge arm (101) is switched from on to off based on the first time point.

13. The control method according to claim 9, further comprising:
step S2: controlling the switching unit (302) to reduce voltage oscillation across the resonant capacitor (301) after one of the switch in the first bridge arm (101) and the second bridge arm (201) is turned off.

14. The control method according to claim 13, wherein the first side of the first power unit (10) and the first side of the second power unit (20) each comprises a first terminal and a second terminal, the second terminal of the first side of the first power unit (10) being connected to the midpoint of the first bridge arm (101), the first terminal of the first side of the second power unit (20) being connected to the midpoint of the second bridge arm (201),

wherein the switching unit (302) comprises:

a third bridge arm (3021) connected in parallel with the first capacitor unit (102); and
a fourth bridge arm (3022) connected in parallel with the second capacitor unit (202), the resonant capacitor (301) is connected between a midpoint of the third bridge arm (3021) and a midpoint of the fourth bridge arm (3022); the first bridge arm (101), the second bridge arm (201), the third bridge arm (3021), and the fourth bridge arm (3022) each comprise an upper switch and a lower switch connected in series,

wherein when current flows in from the first terminal of the first side of the first power unit (10), the step S2 comprises:

step S201: detecting whether the upper switch of the first bridge arm (101) is switched from on to off, and if it is detected that the upper switch of the first bridge arm (101) is switched from on to off at a first time point, predicting a next time point when the upper switch of the first bridge arm (101) is switched from on to off based on the first time point; or

step S202: detecting whether the upper switch of the first bridge arm (101) is switched from on to off, and if it is detected that the upper switch of the first bridge arm (101) is switched from on to off at the first time point, predicting a next time point when the upper switch of the first bridge arm (101) is switched from off to on based on the first time point;

wherein when current flows out from the first terminal of the first side of the first power unit (10), the step S2 comprises:

step S203: detecting whether the lower switch of the first bridge arm (101) is switched from on to off, and if it is detected that the lower switch of the first bridge arm (101) is switched from on to off at the first time point, predicting a next time when the lower switch of the first bridge arm (101) is switched from on to off based on the first time point; or

step S204: detecting whether the lower switch of the first bridge arm (101) is switched from on to off, and if it is detected that the lower switch of the first bridge arm (101) is switched from on to off at the first time point, predicting a next time point when the lower switch of the first bridge arm (101) is switched from off to on based on the first time point.

15. The control method according to claim 13, wherein the first side of the first power unit (10) and the first side of the second power unit (20) each comprises a first terminal and a second terminal, the second terminal of the first side of the first power unit (10) being connected to the midpoint of the first bridge arm (101), the first terminal of the first side of the second power unit (20) being connected to the midpoint of the second bridge arm (201);

wherein the switching unit (302) comprises:

a third bridge arm (3021) connected in parallel with the first capacitor unit (102); and
a fourth bridge arm (3022) connected in parallel with the second capacitor unit (202), the resonant capacitor (301) is connected between a midpoint of the third bridge arm (3021) and a midpoint of the fourth bridge arm (3022); the first bridge arm (101), the second bridge arm (201), the third bridge arm (3021), and the fourth bridge arm (3022) each comprise an upper switch and a lower switch connected in series,

wherein when current flows in from the first terminal of the first side of the first power unit (10), the step S2 comprises:

step S21: turning on one of the upper switch of the third bridge arm (3021) and the upper switch of the fourth bridge arm (3022) before the upper switch of the first bridge arm (101) is turned off, and turning on the other one of the upper switch of the third bridge arm (3021) and the upper switch of the fourth bridge arm (3022) after the upper switch of the first bridge arm (101) is switched from on to off; or
step S22: asynchronously turning on the upper switch of the third bridge arm (3021) and the upper switch of the fourth bridge arm (3022) before the upper switch of the first bridge arm (101) is turned off; or
step S23: asynchronously turning on the upper switch of the third bridge arm (3021) and the upper switch of the fourth bridge arm (3022) after the upper switch of the first bridge arm (101) is turned off; or
step S24: turning off one of the upper switch of the third bridge arm (3021) and the upper switch of the fourth bridge arm (3022) before the upper switch of the first bridge arm (101) is turned off, and turning off the other one of the upper switch of the third bridge arm (3021) and the upper switch of the fourth bridge arm (3022) after the upper switch of the first bridge arm (101) is switched from on to off; or
step S25: asynchronously turning off the upper switch of the third bridge arm (3021) and the upper switch of the fourth bridge arm (3022) before the upper switch of the first bridge arm (101) is turned off; or
step S26: asynchronously turning off the upper switch of the third bridge arm (3021) and the upper switch of the fourth bridge arm (3022) after the upper switch of the first bridge arm (101) is turned off;

wherein when current flows out from the first terminal of the first side of the first power unit (10), the step S2 comprises:

step S27: turning on one of the upper switch of the third bridge arm (3021) and the upper switch of the fourth bridge arm (3022) before the lower switch of the first bridge arm (101) is turned off, and turning on the other one of the upper switch of the third bridge arm (3021) and the upper switch of the fourth bridge arm (3022) after the upper switch of the first bridge arm (101) is switched from on to off; or

step S28: asynchronously turning on the upper switch of the third bridge arm (3021) and the upper switch of the fourth bridge arm (3022) before the lower switch of the first bridge arm (101) is turned off; or

step S29: asynchronously turning on the upper switch of the third bridge arm (3021) and the upper switch of the fourth bridge arm (3022) after the lower switch of the first bridge arm (101) is turned off; or

step S30: turning off one of the upper switch of the third bridge arm (3021) and the upper switch of the fourth bridge arm (3022) before the lower switch of the first bridge arm (101) is turned off, and turning off the other one of the upper switch of the third bridge arm (3021) and the upper switch of the fourth bridge arm (3022) after the upper switch of the first bridge arm (101) is switched from on to off; or

step S31: asynchronously turning off the upper switch of the third bridge arm (3021) and the upper switch of the fourth bridge arm (3022) before the lower switch of the first bridge arm (101) is turned off; or

step S32: asynchronously turning off the upper switch of the third bridge arm (3021) and the upper switch of the fourth bridge arm (3022) after the lower switch of the first bridge arm (101) is turned off;

16. The control method according to claim 15, wherein:

in the step S21, a time interval between a turn-on time point of the upper switch of the third bridge arm (3021) and a turn-on time point of the upper switch of the fourth bridge arm (3022) is $5 \times T/6$, and a time interval between the turn-on time point of the upper switch of the third bridge arm (3021) and a turn-off time point of the upper switch of the first bridge arm (101) is $2 \times T/3$;

in the step S22, the time interval between the turn-on time point of the upper switch of the third bridge arm (3021) and the turn-on time point of the upper switch of the fourth bridge arm (3022) is $5 \times T/6$ or $T/6$, and the time interval between the turn-on time point of the upper switch of the third bridge arm (3021) and the turn-off time point of the upper switch of the first bridge arm (101) is $T/3$;

in the step S23, the time interval between the turn-on time point of the upper switch of the third bridge arm (3021) and the turn-on time point of the upper switch of the fourth bridge arm (3022) is $T/3$ or $T/6$, and the time interval between the turn-on time of the upper switch of the third bridge arm (3021) and the turn-off time point of the upper switch of the first bridge arm (101) is $T/3$ or $5 \times T/6$;

in the step S24, a time interval between a turn-off time point of the upper switch of the third bridge arm (3021) and a turn-off time point of the upper switch of the fourth bridge arm (3022) is $5 \times T/6$, and a time interval between a turn-off time point of the upper witch of the third bridge arm (3021) and the turn-off time of the upper switch of the first bridge arm (101) is $T/6$;

in the step S25, the time interval between turn-off time point of the upper switch of the third bridge arm (3021) and the turn-off time point of the upper switch of the fourth bridge arm (3022) is $5 \times T/6$ or $T/6$, and the time interval between the turn-off time point of the upper switch of the third bridge arm (3021) and the turn-off time point of the upper switch of the first bridge arm (101) is $T/6$;

in the step S26, the time interval between the turn-off time point of the upper switch of the third bridge arm (3021) and the turn-off time point of the upper switch of the fourth bridge arm (3022) is $T/3$ or $T/6$, and the time interval of the turn-off time point of the upper switch of the third bridge arm (3021) and the turn-off time point of the upper switch of the first bridge arm (101) is $T/6$;

in the step S27, the time interval between the turn-on time point of the upper switch of the third bridge arm (3021) and the turn-on time point of the upper switch of the fourth bridge arm (3022) is $5 \times T/6$, and the time interval between the turn-on time point of the upper switch of the third bridge arm (3021) and the turn-off time point of the upper switch of the first bridge arm (101) is $T/6$;

in the step S28, the time interval between the turn-on time point of the upper switch of the third bridge arm (3021) and the turn-on time point of the upper switch of the fourth bridge arm (3022) is $5 \times T/6$ or $T/6$, and the time interval between the turn-on time point of the upper switch of the third bridge arm (3021) and the turn-off time point of the upper switch of the first bridge arm (101) is $T/6$;

in the step S29, the time interval between the turn-on time point of the upper switch of the third bridge arm (3021) and turn-on time point of the upper switch of the fourth bridge arm (3022) is $T/3$ or $T/6$, and the time interval between the turn-on time point of the upper switch of the third bridge arm (3021) and the turn-off time point of the upper switch of the first bridge arm (101) is $T/6$;

in the step S30, the time interval between the turn-off time point of the upper switch of the third bridge arm (3021) and turn-off time point of the upper switch of the fourth bridge arm (3022) is $5 \times T/6$, and the time interval of the turn-off time point of the upper switch of the third bridge arm (3021) and the turn-off time point of the upper switch of the first bridge arm (101) is 2×T/3;

in the step S31, the time interval between the turn-on time point of the upper switch of the third bridge arm (3021) and turn-on time point of the upper switch of the fourth bridge arm (3022) is 5×T/6 or T/6, and the time interval between the turn-off time point of the upper switch of the third bridge arm (3021) and the turn-off time point of the upper switch of the first bridge arm (101) is T/3;

in the step S32, the time interval between turn-off time point of the upper switch of the third bridge arm (3021) and the turn-off time point of the upper switch of the fourth bridge arm (3022) is T/3 or T/6, and the time interval between turn-off time point of the upper switch of the third bridge arm (3021) and turn-off time point of the upper switch of the first bridge arm (101) is T/3 or 5×T/6.

17. The control method according to claim 9, wherein

the first power unit further comprises a seventh bridge arm, which is connected in parallel with the first bridge arm, and the midpoint of the first bridge arm and a midpoint of the seventh bridge arm are connected to the first side of the first power unit, and

the second power unit further comprises an eighth bridge arm, which is connected in parallel with the second bridge arm, and the midpoint of the second bridge arm and a midpoint of the eighth bridge arm are connected to the first side of the second power unit.

18. The control method according to claim 9, wherein the positive terminal of the first capacitor unit and the midpoint of the first bridge arm are connected to the first side of the first power unit, and the negative terminal of the second capacitor unit and the midpoint of the second bridge arm are connected to the first side of the second power unit.

19. A power conversion system, comprising N power conversion modules of any one of claims 1 to 8, where N is an integer greater than or equal to 1.

20. The power conversion system according to claim 19, wherein the first side of the first power unit and the first side of the second power unit are connected in series to form a first side of each power conversion module, the first sides of the N power conversion modules are connected in series, where N is greater than or equal to 2.

21. The power conversion system according to claim 20, further comprising an AC/DC circuit, wherein the first sides of the N power conversion modules are connected in series to a DC side of the AC/DC circuit.

22. The power conversion system according to claim 19, further comprising an AC/DC circuit, wherein the first side of the first power unit and the first side of the second power unit are connected in series to a DC side of the AC/DC circuit, and N is equal to 1.

FIG. 1

FIG. 2

FIG. 3

FIG. 4

FIG. 5

FIG. 6

FIG. 7

FIG. 8

FIG. 9

FIG. 10

FIG. 11

FIG. 12

Vdc

ig →

+

D11    S11    C11    P11    a

it

Vb

D12    S12    P12

Ct    VCt= -Vdc

Lt

D21    S21    P21    b

C21

D22    S22    P22

FIG. 13(a)

Vdc

ig →

+

D11    S11    C11    P11    a

it

Vb

D12    S12    P12

Ct    VCt=0

Lt

D21    S21    P21    b

C21

D22    S22    P22

FIG. 13(b)

FIG. 13(c)

FIG. 13(d)

| | AC-DC | | | DC-DC | | |
|---|---|---|---|---|---|---|
| | S11/S12 | S21/S22 | Vb | P11/P12 | P21/P22 | Vab |
| a | 1/0 | 0/1 | 0 | 1/0 | 1/0 | -Vdc |
| | | | | 0/1 | 0/1 | |
| b | 0/1 | 0/1 | Vdc | 1/0 | 1/0 | 0 |
| | | | | 0/1 | 0/1 | |
| c | 1/0 | 1/0 | Vdc | 1/0 | 1/0 | 0 |
| | | | | 0/1 | 0/1 | |
| d | 0/1 | 1/0 | 2Vdc | 1/0 | 1/0 | Vdc |
| | | | | 0/1 | 0/1 | |

FIG. 14

FIG. 15

FIG. 16

FIG. 17(a)

FIG. 17(b)

FIG. 17(c)

FIG. 18

FIG. 19

FIG. 20

| | Post-stage switch | Action sequence of switching time | Action time difference | Action sequence of switching time | Action time difference |
|---|---|---|---|---|---|
| Turn on S11 | rising edge | $P_{11} \to S_{11} \to P_{21}$ | $\triangle t_{12}=1/6Tt$ $\triangle t_{23}=2/3Tt$ | $P_{21} \to S_{11} \to P_{11}$ | $\triangle t_{12}=2/3Tt$ $\triangle t_{23}=1/6Tt$ |
| | falling edge | $P_{11} \to S_{11} \to P_{21}$ | $\triangle t_{12}=2/3Tt$ $\triangle t_{23}=1/6Tt$ | $P_{21} \to S_{11} \to P_{11}$ | $\triangle t_{12}=1/6Tt$ $\triangle t_{23}=2/3Tt$ |
| Turn off S11 | rising edge | $P_{11} \to S_{11} \to P_{21}$ | $\triangle t_{12}=2/3Tt$ $\triangle t_{23}=1/6Tt$ | $P_{21} \to S_{11} \to P_{11}$ | $\triangle t_{12}=1/6Tt$ $\triangle t_{23}=2/3Tt$ |
| | | $S_{11} \to P_{11} \to P_{21}$ | $\triangle t_{12}=1/3Tt$ $\triangle t_{23}=5/6Tt$ | $S_{11} \to P_{21} \to P_{11}$ | $\triangle t_{12}=1/6Tt$ $\triangle t_{23}=1/6Tt$ |
| | | $P_{11} \to P_{21} \to S_{11}$ | $\triangle t_{12}=1/6Tt$ $\triangle t_{23}=1/6Tt$ | $P_{21} \to P_{11} \to S_{11}$ | $\triangle t_{12}=1/3Tt$ $\triangle t_{23}=5/6Tt$ |
| | falling edge | $P_{11} \to S_{11} \to P_{21}$ | $\triangle t_{12}=1/6Tt$ $\triangle t_{23}=2/3Tt$ | $P_{21} \to S_{11} \to P_{11}$ | $\triangle t_{12}=2/3Tt$ $\triangle t_{23}=1/6Tt$ |
| | | $S_{11} \to P_{11} \to P_{21}$ | $\triangle t_{12}=1/6Tt$ $\triangle t_{23}=1/6Tt$ | $S_{11} \to P_{21} \to P_{11}$ | $\triangle t_{12}=1/3Tt$ $\triangle t_{23}=5/6Tt$ |
| | | $P_{11} \to P_{21} \to S_{11}$ | $\triangle t_{12}=1/3Tt$ $\triangle t_{23}=5/6Tt$ | $P_{21} \to P_{11} \to S_{11}$ | $\triangle t_{12}=1/6Tt$ $\triangle t_{23}=1/6Tt$ |
| Turn on S12 | rising edge | $P_{11} \to S_{12} \to P_{21}$ | $\triangle t_{12}=2/3Tt$ $\triangle t_{23}=1/6Tt$ | $P_{21} \to S_{12} \to P_{11}$ | $\triangle t_{12}=1/6Tt$ $\triangle t_{23}=2/3Tt$ |
| | falling edge | $P_{11} \to S_{12} \to P_{21}$ | $\triangle t_{12}=1/6Tt$ $\triangle t_{23}=2/3Tt$ | $P_{21} \to S_{12} \to P_{11}$ | $\triangle t_{12}=2/3Tt$ $\triangle t_{23}=1/6Tt$ |
| Turn off S12 | rising edge | $P_{11} \to S_{12} \to P_{21}$ | $\triangle t_{12}=1/6Tt$ $\triangle t_{23}=2/3Tt$ | $P_{21} \to S_{12} \to P_{11}$ | $\triangle t_{12}=2/3Tt$ $\triangle t_{23}=1/6Tt$ |
| | | $S_{12} \to P_{11} \to P_{21}$ | $\triangle t_{12}=1/6Tt$ $\triangle t_{23}=1/6Tt$ | $S_{12} \to P_{21} \to P_{11}$ | $\triangle t_{12}=1/3Tt$ $\triangle t_{23}=5/6Tt$ |
| | | $P_{11} \to P_{21} \to S_{12}$ | $\triangle t_{12}=1/3Tt$ $\triangle t_{23}=5/6Tt$ | $P_{21} \to P_{11} \to S_{12}$ | $\triangle t_{12}=1/6Tt$ $\triangle t_{23}=1/6Tt$ |
| | falling edge | $P_{11} \to S_{12} \to P_{21}$ | $\triangle t_{12}=2/3Tt$ $\triangle t_{23}=1/6Tt$ | $P_{21} \to S_{12} \to P_{11}$ | $\triangle t_{12}=1/6Tt$ $\triangle t_{23}=2/3Tt$ |
| | | $S_{12} \to P_{11} \to P_{21}$ | $\triangle t_{12}=1/3Tt$ $\triangle t_{23}=5/6Tt$ | $S_{12} \to P_{21} \to P_{11}$ | $\triangle t_{12}=1/6Tt$ $\triangle t_{23}=1/6Tt$ |
| | | $P_{11} \to P_{21} \to S_{12}$ | $\triangle t_{12}=1/6Tt$ $\triangle t_{23}=1/6Tt$ | $P_{21} \to P_{11} \to S_{12}$ | $\triangle t_{12}=1/3Tt$ $\triangle t_{23}=5/6Tt$ |

FIG. 21

FIG. 22

FIG. 23(a)

Steady-state △t₁

Vb · · · · · ·
Vab - - - - ·
Vct ———

2000

0

-2000

Ig · · · · · ·
It - - - - ·
Ict ———

400

200

0

-200

P₁₁ · · · · · ·
P₂₁ - - - - ·
P₂₂ ———

1

0.5

0

ILr1 · · · · · ·
ILm1 - - - - ·
ILs1 ———

50

0

-50

ILr2 · · · · · ·
ILm2 - - - - ·
ILs2 ———

50

0

-50

1.75    1.755    1.76    1.765    1.77    1.775

t    ×10⁻³

FIG. 23(b)

Turn-on process $\triangle t_2$

FIG. 23(c)

Turn-off process △t3

FIG. 23(d)

FIG. 24

FIG. 25

FIG. 26

FIG. 27

Europäisches
Patentamt

European
Patent Office

Office européen
des brevets

# EUROPEAN SEARCH REPORT

**Application Number**

EP 24 19 8048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 350 580 A (UNIV SHANGHAI DIANJI) 9 February 2021 (2021-02-09) * figure 2 * | 1 | INV. H02M1/00 H02M3/335 |
| X | US 2023/025144 A1 (MANTOV GEORGE [BG] ET AL) 26 January 2023 (2023-01-26) | 1-9, 13-15, 17-22 | |
| A | * figure 3 * | 10-12,16 | |
| X | US 2009/021966 A1 (JACOBSON BORIS S [US] ET AL) 22 January 2009 (2009-01-22) * figure 3A * | 1 | |

**TECHNICAL FIELDS SEARCHED (IPC)**

H02M

The present search report has been drawn up for all claims

| Place of search | Date of completion of the search | Examiner |
|---|---|---|
| The Hague | 28 January 2025 | Gotzig, Bernhard |

EPO FORM 1503 03.82 (P04C01)

## ANNEX TO THE EUROPEAN SEARCH REPORT
## ON EUROPEAN PATENT APPLICATION NO.

EP 24 19 8048

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| CN 112350580 | A | 09-02-2021 | NONE | | |
| US 2023025144 | A1 | 26-01-2023 | NONE | | |
| US 2009021966 | A1 | 22-01-2009 | US 2009021966 A1 | | 22-01-2009 |
| | | | WO 2009154636 A2 | | 23-12-2009 |

EPO FORM P0459

For more details about this annex : see Official Journal of the European Patent Office, No. 12/82